# EUROPÄISCHE PATENTANMELDUNG

(11) **EP 3 156 590 A1**
(43) Veröffentlichungstag der Anmeldung: **19.04.2017**
(21) Anmeldenummer: 16193489.8
(22) Anmeldetag: 12.10.2016
(51) Int. Cl.: F01D 5/02, F01D 25/24, F16F 15/32

(54) **BAUGRUPPE FÜR DIE DREHFESTE VERBINDUNG MINDESTENS ZWEIER ROTIERENDER BAUTEILE IN EINER GASTURBINE UND AUSWUCHTVERFAHREN**

(30) Priorität: 14.10.2015 DE 102015219954
(71) Anmelder: Rolls-Royce Deutschland Ltd & Co KG, 15827 Blankenfelde-Mahlow (DE)
(72) Erfinder: Obereich, Falko, 01945 Ruhland GT Arnsdorf (DE)
(74) Vertreter: Maikowski & Ninnemann Patentanwälte Partnerschaft mbB

(57) **Zusammenfassung**

Die Erfindung betrifft eine Baugruppe für die drehfeste Verbindung mindestens zweier rotierender Bauteile in einer Gasturbine, wobei die Baugruppe (B, Ba) wenigstens das Folgende aufweist:
- ein Halteelement (1, 1.1,1.2) für mindestens vier Verbindungselemente (2a - 2d), wobei das Halteelement (1, 1.1, 1.2)
o für jedes der Verbindungselemente (2a - 2d) eine Öffnung (14a, 14b, 15a, 15b) aufweist, in die ein Abschnitt eines Verbindungselements (2a - 2d) hindurch gesteckt werden kann, und
o zwischen zwei Öffnungen (14a, 14b; 15a, 15b) einen Abschnitt (11; 12) ausbildet, der bei in die Öffnungen (14a, 14b; 15a, 15b) eingesteckten Verbindungselementen (2a - 2d) diese gegen ein Verdrehen in der Öffnung (14a, 14b; 15a, 15b) sichert,
und
- mindestens ein Befestigungselement (3), um das Halteelement (1, 1.1, 1.2) an einem der Bauteile (R, S) zu halten und/oder das Halteelement (1, 1.1, 1.2) und mindestens zwei Bauteile (R, S) der Baugruppe (B, Ba) zu verbinden, bevor die mindestens zwei rotierenden Bauteile (R, S, W) über die Verbindungselemente (2a - 2d) drehfest miteinander verbunden werden.

Erfindungsgemäß ist das Befestigungselement (3) zusätzlich dazu eingerichtet und vorgesehen, mindestens ein Wuchtelement (4) an dem Halteelement (1, 1.1, 1.2) festzulegen, um eine Unwucht der rotierenden Bauteile (R, S, W) im Bereich ihrer Verbindung ausgleichen zu können. Dabei ist eine Befestigungsöffnung (13) für das Befestigungselement (3) an dem Halteelement (1, 1.1, 1.2) in etwa mittig zwischen zwei Paaren von Öffnungen (14a, 14b; 15a, 15b) für die Verbindungselemente (2a - 2d) vorgesehen.

Darüber hinaus ist ein Auswuchtverfahren vorgeschlagen.

## Beschreibung

Die Erfindung betrifft insbesondere eine Baugruppe für die drehfeste Verbindung mindestens zweier Bauteile in einer Gasturbine sowie ein Verfahren zum Auswuchten einer Anordnung mit mindestens einer solchen Baugruppe.

Innerhalb einer Gasturbine müssen unterschiedliche Bauteile drehfest miteinander verbunden werden. Dies trifft sowohl statische, d.h. im Betrieb der Gasturbine und bewegte Bauteile als auch rotierende Bauteile im Bereich einer Verdichter- oder Turbinenstufe. Für die drehfeste Verbindung miteinander bilden die einzelnen Gasturbinenbauteile üblicherweise Flansche mit mehreren Öffnungen oder Bohrungen aus, durch die zur drehfesten Verbindung Verbindungselemente, wie zum Beispiel Gewindebolzen gesteckt und verschraubt werden. Für die drehfeste Verbindung von Gasturbinenbauteilen werden üblicherweise mehrere entlang eines Umfangs eines Gasturbinenbauteils angeordnete Verbindungselemente genutzt. Diese Verbindungselemente können zur Vereinfachung der Montage verdrehsicher an einem der Bauteile gehalten sein, wenn die drehfeste Verbindung mit dem wenigstens einen anderen Bauteil erfolgt. In diesem Zusammenhang ist es beispielsweise aus der EP 1 091 089 B1, der US 5,052,891A und der US 2013/0011253 A1 bekannt, an einem separaten Halteelement für zwei Verbindungselemente eine Verdrehsicherung vorzusehen. Über dieses Halteelement sind dann beispielsweise bei als Verbindungselementen vorgesehenen Bolzen die Bolzen an ihren Bolzenköpfen gegen eine Drehung gesichert, wenn auf diese eine Mutter aufgeschraubt wird.

Bei der aus der US 2013/0011253 A1 bekannten Lösung für die Verbindung zweier stationärer Gasturbinenbauteile im Bereich eines Gehäuses ist an einem Halteelement zudem ein Befestigungselement in Form eines vorstehenden Zapfens ausgebildet. Hierüber kann das Halteelement an einem der zu verbindenden Bauteile vorpositioniert werden. Der an dem Halteelement ausgeformte Zapfen wird hierfür einfach in eine entsprechende Öffnung an einem randseitigen Flansch des Bauteils eingesteckt. Bei entsprechender Länge des Zapfens kann dieser auch miteinander fluchtende Öffnungen an den mehreren zu verbindenden Bauteilen durchgreifen, um das Halteelement vorzupositionieren.

Aus der Praxis ist ferner bekannt, Halteelemente, an denen die Verbindungselemente für die Verbindung zweier Gasturbinenbauteile verdrehsicherer gehalten sind, auch für die zusätzliche Anbringung von Wuchtgewichten zu nutzen, wenn es sich bei den miteinander zu verbindenden Bauteilen um im Betrieb der Gasturbine rotierende Bauteile handelt. Hierfür ist dann regelmäßig an einem Halteelement ein Abschnitt vorgesehen, an den für das Auswuchten notwendige Gewichte angeklemmt oder angeschraubt werden können. Um den bei rotierenden Bauteilen innerhalb einer Gasturbine bestehenden Anforderungen an eine möglichst geringe Unwucht gerecht zu werden, werden hierbei oftmals entlang einer Kreislinie um eine Rotationsachse der Gasturbinenbauteile mindestens ein Dutzend Befestigungsstellen definiert, an denen jeweils ein Wuchtgewicht angebracht werden kann.

In der EP 1 380 722 B1 ist vorgeschlagen, sogenannte Kratzschutzplatten unterschiedlicher Form und Masse für das Auswuchten an rotierenden Gasturbinenbauteilen vorzusehen. Über derartige Kratzschutzplatten wird verhindert, dass bei der Montage ein für die drehfeste Verbindung genutzter Bolzen oder eine hierfür genutzte Schraube über seinen Bolzen- oder Schraubenkopf direkt an einer Flanschoberfläche an einem der Bauteile anliegt und der Bolzenkopf bei der Montage die Flanschoberfläche beschädigt. Die als Halteelemente nutzbaren Kratzschutzplatten der EP 1 380 722 B1 werden üblicherweise mit separat anzubringenden Verdrehsicherungen kombiniert, um bei der Montage die Bolzenköpfe in Position zu halten.

Ausgehend von dem zuvor genannten Stand der Technik liegt der Erfindung die Aufgabe zugrunde, die drehfeste Verbindung zweier Gasturbinenbauteile über mehrere (mindestens zwei) Verbindungselemente, wie zum Beispiel Gewindebolzen oder Schrauben, zu verbessern und den Montageprozess zu vereinfachen sowie bei rotierenden Gasturbinenbauteilen das Auswuchten zu erleichtern.

Diese Aufgabe wird sowohl mit einer Baugruppe des Anspruchs 1 als auch mit einem Auswuchtverfahren des Anspruchs 9 gelöst.

Erfindungsgemäß ist eine Baugruppe für die drehfeste Verbindung mindestens zweier rotierender Bauteile in einer Gasturbine vorgeschlagen, wobei diese Baugruppe wenigstens ein Halteelement, mindestens zwei Verbindungselemente und mindestens ein Befestigungselement umfasst. Die mindestens zwei typischerweise längserstreckten Verbindungselemente, zum Beispiel in Form von (Gewinde-) Bolzen, Gewindestäben oder Schrauben, sind zur drehfesten Verbindung der beiden Bauteile aneinander vorgesehen. Das Halteelement weist für jedes der Verbindungselemente eine Öffnung auf, in die ein Abschnitt eines Verbindungselements entlang einer Einsteckachse hindurch gesteckt werden kann. Zwischen zwei Öffnungen bildet das Halteelement einen vorzugsweise stegartigen Abschnitt aus, der bei in die Öffnungen eingesteckten Verbindungselementen diese gegen eine Verdrehung in der Öffnung um die Einsteckachse sichert. Über das Befestigungselement wird das Halteelement z.B. an wenigstens einem der Bauteile gehalten, bevor die Bauteile über die Verbindungselemente drehfest miteinander verbunden werden. Zusätzlich ist das Befestigungselement vorliegend dazu eingerichtet und vorgesehen, mindestens ein Wuchtelement an dem Halteelement festzulegen, um eine Unwucht der rotierenden Bauteile im Bereich ihrer Verbindung ausgleichen zu können. Das mindestens eine Befestigungselement erfüllt somit eine Doppelfunktion. Einerseits ist hierüber das Halteelement bestimmungsgemäß vorpositionierbar. Andererseits dient das Befestigungselement der Festlegung mindestens eines Wuchtelements (Wuchtgewichts), über das eine detektierte Unwucht ausgeglichen werden kann. Dabei ist eine Befestigungsöffnung für das Befestigungselement an dem Halteelement in etwa mittig zwischen zwei Paaren von Öffnungen für die Verbindungselemente vorgesehen.

Die in etwa mittige Anordnung des Befestigungselements, an dem ein (Zusatz ) Wuchtelement festgelegt werden kann, und die damit vorzugweise einhergehende - bezogen auf eine durch das Befestigungselement und radial zu einer Rotationsachse der miteinander verbundenen Bauteile verlaufende Achse - symmetrische Gestaltung eines Halteelements erlaubt eine Änderung des Wuchtgewichts im Bereich des Massenschwerpunkts des Halteelements. Mit anderen Worten bleibt der Massenschwerpunkt im Wesentlichen unverändert, auch wenn das Halteelement mit einem oder mehreren zusätzlichen Wuchtelementen kombiniert wird. Das Befestigungselement stellt somit bevorzugt eine Anbringungsstelle für mindestens ein zusätzliches Wuchtelement im Bereich des Massenschwerpunktes des Halteelements bereit. Dabei verläuft der Massenschwerpunkt des Wuchtelements im eingebauten Zustand z.B. in etwa auf einer radialen Achse, die durch den Massenschwerpunkt des Halteelements und durch die Rotationsachse der miteinander verbundenen Bauteile verläuft. Da hierdurch bei einer Erhöhung eines Wuchtgewichts an dem Halteelement keine Veränderung des Massenschwerpunktes in Bezug auf die veränderte Wuchtmasse berücksichtigt werden muss, lässt sich ein Auswuchtverfahren leichter automatisieren.

Vorzugsweise ist das Befestigungselement als separates Bauteil ausgebildet, das durch eine Halteöffnung des Halteelements greift. Das Befestigungselement kann somit beispielsweise ein Gewindebolzen oder eine Schraube sein. Auf diesen Bolzen oder diese Schraube wird dann in einer Ausführungsvariante eine Mutter geschraubt, um das Halteelement an wenigstens einem der Bauteile festzulegen, bevor die drehfeste Verbindung über die zusätzlichen Verbindungselemente erfolgt. Ein Wuchtelement oder mehrere Wuchtelemente können hierbei beispielsweise über einen (Bolzen- oder Schrauben-) Kopf des jeweiligen Befestigungselements an dem Halteelement gehalten sein. Alternativ oder ergänzend kann ein Wuchtelement über eine mit dem Befestigungselement verbundene Mutter an dem Halteelement gehalten sein, zum Beispiel wenn das Befestigungselement in Form eines Bolzens oder einer Schraube so positioniert ist, dass der Bolzen- oder Schraubenkopf in Richtung einer Verdichterwelle zeigt.

Dementsprechend wird es auch bevorzugt, dass ein an dem Befestigungselement festgelegtes Wuchtelement über das Befestigungselement formschlüssig an dem Halteelement fixiert ist. Über den Formschluss ist dann auch sichergestellt, dass das jeweilige Wuchtelement gerade bei sehr schnell rotierenden Gasturbinenbauteilen sicher an dem Halteelement und damit den Gasturbinenbauteilen gehalten ist.

Der von dem Halteelement ausgebildete Abschnitt zur Sicherung der Verbindungselemente gegen ein Verdrehen ist zum Beispiel stegartig ausgebildet. Beispielsweise erstreckt sich ein solcher stegartiger Abschnitt radial bezogen auf eine Rotationsachse der beiden drehfest miteinander verbundenen Gasturbinenbauteile, wenn die Baugruppe bestimmungsgemäß montiert wurde. Zwei Verbindungselemente können somit axial durch die entsprechenden Öffnungen an dem Halteelement eingesteckt werden. Ein Verdrehen der in die Öffnung eingesteckten Verbindungselemente ist dann aber über den sich zwischen den Öffnungen befindlichen stegartigen Abschnitt verhindert.

Um gerade bei kreisringförmigen Flanschen zweier im Betrieb der Gasturbine rotierender Bauteile eine Anlage der Verbindungselemente, zum Beispiel im Bereich von Bolzenköpfen, an einem zur Verdrehsicherung vorgesehenen Abschnitt des Halteelements zu verbessern, ist dieser in einer Ausführungsvariante keilförmig ausgebildet. Hierbei verbreitert sich der Abschnitt in einer radial nach außen weisenden Richtung, um für zwei auf gegenüberliegenden Seiten dieses keilsförmigen Abschnitts angrenzenden Bolzen- oder Schraubenköpfen eine größere Anlagefläche bereitzustellen.

Um für einen Kopf eines Verbindungselements an dem Halteelement eine größere Anlagefläche in Verbindungs- oder Steckrichtung bereitzustellen, ist in einem Ausführungsbeispiel am Fuß eines stegartigen Abschnitts an der Basis des Halteelements, an der die Verbindungselemente anliegen und an der der stegartige Abschnitt erhaben vorsteht, eine längserstreckte Einkerbung vorgesehen. Über diese Einkerbung ist eine Auflagefläche für einen Kopf des Verbindungselements vergrößert, ohne hierfür das Halteelement oder den Kopf des Verbindungselements selbst vergrößern zu müssen. Die längserstreckte Einkerbung am Fuß des stegartigen Abschnitts ist hierbei nach Art eines Freistichs dazu genutzt, den Kopf des Verbindungselements oberhalb der Einkerbung in definierter Weise an dem stegartigen Abschnitt anliegen zu lassen oder zumindest hieran angrenzend positionieren zu können.

Zwar ist die Ausbildung einer längserstreckten Einkerbung am Fuß des stegartigen, als Verdrehsicherung wirkenden Abschnitts gerade für die drehfeste Verbindung zweier im Betrieb der Gasturbine rotierender Bauteile von Vorteil. Jedoch ist eine derart optimierte Verbindung auch bei statischen Bauteilen, die drehfesten miteinander zu verbinden sind, von Vorteil. Dieser Aspekt ist somit nicht auf rotierende Gasturbinenbauteile und insbesondere nicht in diesem Bereich verwendete Schrauben- oder Bolzenverbindungen für rotierende Bauteile einer Verdichter- oder Turbinenstufe der Gasturbine beschränkt.

Eine erfindungsgemäß ausgestaltete Baugruppe kommt bevorzugt in einer Anordnung zum Einsatz, bei der die mindestens zwei Gasturbinenbauteile über eine erfindungsgemäß ausgestaltete Baugruppe oder mehrerer solcher Baugruppen drehfest miteinander verbunden sind.

Beispielsweise sind wenigstens zwei erfindungsgemäß ausgestaltete Baugruppen, je mit Halteelement, mindestens zwei Verbindungselementen und einem Befestigungselement, entlang einer Kreislinie um eine Rotationsachse zweier rotierender Gasturbinenbauteile zueinander beabstandet angeordnet, um die wenigstens zwei Gasturbinenbauteile drehfest miteinander zu verbinden. Durch die Möglichkeit über das Befestigungselement zusätzliche Wuchtelemente zum Auswuchten festlegen zu können, hat sich gezeigt, dass bei entsprechender Dimensionierung des Halteelements und der Wuchtelemente weniger als ein Dutzend, vorzugsweise weniger als neun Verbindungsstellen ausreichend sind, um die wenigstens zwei Gasturbinenbauteile mittels erfindungsgemäß ausgestrahlte Baugruppen drehfest miteinander zu verbinden und ausreichende Möglichkeiten zum Auswuchten vorzusehen. An jeder der Verbindungsstellen ist dann beispielsweise ein Halteelement mit mindestens zwei oder vier Verbindungselementen vorgesehen. In einer Ausführungsvariante sind beispielsweise entlang einer Kreislinie an einem kreisringförmigen Flansch eines Rotorbauteils sechs Verbindungsstellen äquidistant verteilt vorgesehen.

Zur Reduzierung des Aufwands beim Auswuchten und zur Verringerung der für das Auswuchten benötigten Komponenten, ist in einer Weiterbildung vorgesehen, ein Halteelement für wenigstens zwei Verbindungselemente selbst als Wuchtelement zu nutzen und nicht nur das (zusätzlich) über das Befestigungselement hieran festgelegte Wuchtelement oder Wuchtgewicht. So können wenigstens zwei Baugruppen mit unterschiedlich schweren Halteelementen entlang einer Kreislinie um eine Rotationsachse der Gasturbinenbauteile zueinander beabstandet vorgesehen sein, um hierüber eine festgestellte Unwucht im Bereich der Verbindung der wenigstens zwei Gasturbinenbauteile auszugleichen. So können beispielsweise unterschiedlich schwere Halteelemente für erfindungsgemäß ausgestaltete Baugruppen vorgehalten sein, die je nach Bedarf, d.h., zum Ausgleichen einer entsprechenden Unwucht, und für das Halten der Verbindungselemente verwendbar sind.

In einem Ausführungsbeispiel sind unterschiedlich schwere Halteelemente mit identischer Länge ausgebildet. Unter einer "Länge" des Halteelements wird hierbei üblicherweise die Umfangslänge entlang einer Umfangsrichtung um die Rotationsachse verstanden. Ein schwereres der mindestens zwei Halteelemente weist hier dann aber in mindestens einem Abschnitt eine größere Dicke und/oder Breite auf, wenn es aus demselben Material gefertigt ist. Die unterschiedlich schweren Halteelemente können somit beispielsweise bezogen auf eine Rotationsachse der wenigstens zwei miteinander drehfest zu verbindenden Bauteile der Anordnung in radialer Richtung gleich breit und in Umfangsrichtung gleich lang sein, sind aber im Bereich wenigstens eines Abschnitts unterschiedlich dick. Die Längen der unterschiedlichen schweren Haltelemente in Umfangsrichtung sind vorzugsweise zwecks Austauschbarkeit stets gleich. Ob die Breite oder die Dicke oder beide Größen bei unterschiedlich schweren Halteelementen verschieden gewählt sein können, hängt üblicherweise von den äußeren Randbedingungen (wie z.B. Bauraum, einer konstanten Klemmlänge der Verbindungselemente, etc.) ab.

Durch die Nutzung eines Halteelements selbst als möglichem Wuchtgewicht und der Möglichkeit, hieran über das ohnehin vorgesehene Befestigungselement wenigstens ein zusätzliches Wuchtelement und damit Wuchtgewicht festlegen zu können, ist gemäß einem weiteren Aspekt der Erfindung ein verbessertes Auswuchtverfahren vorgeschlagen.

Hierbei werden zunächst mindestens zwei unterschiedlich schwere erste und zweite Halteelemente mit je mindestens einem Befestigungselement sowie mindestens ein Wuchtelement, das über ein Befestigungselement an einem ersten oder zweiten Halteelement festlegbar ist, bereitgestellt. Nach einer ersten Variante werden die mindestens zwei im Betrieb der Gasturbine rotierenden Gasturbinenbauteilen drehfest miteinander verbunden, so dass sie gemeinsam um dieselbe Rotationsachse rotieren. Hierbei sind die für die drehfeste Verbindung benötigten Verbindungselemente durch identisch ausgebildete und gleich schwere erste Halteelemente geführt. Vorzugsweise wurden diese Halteelemente vor der Verbindung an einem der Gasturbinenbauteile fixiert. Gegebenenfalls sind die entsprechenden Verbindungselemente bereits an ein Halteelement eingesteckt und hieran vorpositioniert, bevor das jeweilige Halteelement an dem Gasturbinenbauteil fixiert wird. Anschließend wird eine Unwucht im Bereich der Verbindung der mindestens zwei Gasturbinenbauteile, z.B. mittels einer Auswuchtvorrichtung in Form einer Wuchtmaschine, gemessen. Wird eine Unwucht festgestellt, wird wenigstens eines der ersten Halteelemente durch ein zweites Halteelement mit einem anderen Gewicht ausgetauscht und/oder es wird mindestens ein Wuchtelement an einem der Halteelemente angebracht, um die Unwucht auszugleichen. Hierbei können letztendlich auch mehrere Wuchtelemente vorgesehen und über ein Befestigungselement an einem ersten oder zweiten Halteelement festlegbar sein.

Nach einer zweiten Variante wird zum Auswuchten eine Auswuchtvorrichtung eingesetzt, die wenigstens eines der im Betrieb rotierenden und dann drehfest miteinander verbundenen Gasturbinenbauteil durch ein maßgeschneidertes, ggf. mehrteiliges Vorrichtungsbauteil, einen sogenannten Dummy, simuliert. Beispielsweise handelt es sich bei wenigstens einem der Gasturbinenbauteile um ein Bauteil einer Hochdruckturbine eines Gasturbinentriebwerks und bei dem wenigstens einen anderen Gasturbinenbauteil um ein Bauteil eines Verdichters des Gasturbinentriebwerks, z.B. eine Verdichterwelle. Über die Auswuchtvorrichtung, üblicherweise in Form einer sogenannten "Wuchtmaschine", wird dann beispielsweise die Hochdruckturbine oder der Verdichter simuliert und eine Schnittstelle zur drehfesten Verbindung mit dem auszuwuchtenden Gasturbinenbauteil oder mehreren auszuwuchtenden, bereits - z.B. über mehrere Befestigungselemente - aneinander fixierten Gasturbinenbauteilen ausgebildet.

Bei einem erfindungsgemäßen Auswuchtverfahren sowohl nach der ersten als auch nach der zweiten Alternative ist bei vergleichsweise geringer Anzahl möglicher Verbindungsstellen für Halteelemente (Wuchtpositionen) und einer - gegenüber bisher üblichen Ansätzen - reduzierten Anzahl von einem oder mehreren zusätzlichen Wuchtgewichten mit unterschiedlicher Masse trotzdem eine sehr hohe Wuchtgüte erreichbar. Erfindungsgemäß ist hierfür des Weiteren vorgesehen, dass ein Satz von mindestens zwei unterschiedlich schweren und hinsichtlich ihrer Gewichts zueinander abgestuften Typen an Wuchtelementen bereitgestellt wird, die über ein Befestigungselement an den Halteelementen festlegbar sind, um eine Unwucht auszugleichen

In einem Ausführungsbeispiel werden ferner mindestens drei unterschiedlich schwere erste, zweite und dritte Halteelemente mit je mindestens einem Befestigungselement bereitgestellt. Die ersten Halteelemente weisen dabei ein erstes (Standard-) Gewicht auf und sind zum erstmaligen Verbinden der mindestens zwei drehfesten miteinander zu verbindenden Bauteilen aneinander vorgesehen. Wird eine Unwucht festgestellt, stehen die zweiten und dritten Halteelemente mit hiervon abweichenden höheren Gewichten, also zweite und dritte Halteelemente einer zweiten und dritten Gewichtsstufe, zur Verfügung, um die Unwucht auszugleichen. Bevorzugt, insbesondere bei größeren Unwuchten erfolgt hierbei über das Gewicht der zweiten und dritten Halteelemente die Anbringung eines um ein Vielfaches größeren Wuchtgewichts als bei der (zusätzlichen) Anbringung eines (Zusatz-) Wuchtelements, das an einem Befestigungselement eines ersten, zweiten oder dritten Halteelements festgelegt wird.

Um über die zweiten und dritten Halteelemente ein Wuchtgewicht in gleich bleibenden Stufen erhöhen zu können, ist eine Gewichtsdifferenz zwischen den Gewichten eines zweiten und eines ersten Halteelements identisch zu der Gewichtsdifferenz zwischen den Gewichten eines dritten und zweiten Halteelements. Die Gewichtsunterschiede zwischen Halteelementen benachbarter Gewichtsstufen - bezogen auf einen Teilkreisradius um eine Rotationsachse - sind somit identisch und liegen beispielsweise bei 12,5 g. Hierbei wie auch im Folgenden beziehen sich die Begriffe "Gewicht" und "Gewichtsdifferenz" zwischen den Halteelementen immer auf die tatsächlich wirkende Wuchtmasse (also das Netto-Mehrgewicht, welches zur Korrektur einer Unwucht zur Verfügung steht).

Beispielsweise kann vorgesehen sein, dass das Gesamtgewicht eines einzelnen über ein Befestigungselement an einem Halteelement anbringbaren Wuchtelementes oder das Gesamtgewicht mehrerer über ein Befestigungselement an einem Halteelement anbringbarer (unterschiedlich oder gleich schwerer) Wuchtelemente genau einer minimalen, d.h., der geringst möglichen Gewichtsdifferenz zwischen zwei unterschiedlich schweren Halteelementen (benachbarter Gewichtsstufen) entspricht. Anstelle das Halteelement einer ersten Gewichtsstufe gegen ein nächst schwereres Halteelement einer benachbarten Gewichtsstufe austauschen zu müssen, kann somit in dieser Variante stattdessen ein zusätzliches Wuchtelement mit demselben Netto-Mehrgewicht zum Ausgleich einer entsprechenden Unwucht verwendet werden.

In einer anderen Variante ist vorgesehen, dass eine Gewichtsdifferenz, die durch ein an einem Halteelement festlegbares Wuchtelement oder mehrere an dem Halteelement festlegbare Wuchtelemente bereitgestellt werden kann, genau der Hälfte oder maximal der Hälfte der minimalen Gewichtsdifferenz zwischen zwei unterschiedlich schweren Halteelementen entspricht. Mit anderen Worten sind beispielsweise mehrere (mindestens zwei) gleich oder unterschiedlich schwere Wuchtelemente über das eine Befestigungselement an einem Halteelement festlegbar und die minimale Gewichtsdifferenz zwischen unterschiedlich schweren Halteelementen ist (a) genauso groß wie oder (b) größer als das Doppelte des maximalen Gesamtgewichts aller über ein Befestigungselement an einem Halteelement bestimmungsgemäß festlegbaren Wuchtelemente. Mit anderen Worten sind hier mehrere Wuchtelemente vorgesehen und feiner abgestuft als die unterschiedlich schweren Halteelemente, um über die an einem Befestigungselement festlegbaren Wuchtelemente eine genauere Abstimmung zum Ausgleich einer Unwucht vornehmen zu können.

In einem Ausführungsbeispiel nach der vorgenannten Variante (a) sind z.B. drei unterschiedlich schwerere Typen von Wuchtelementen zu 1,25 g, 2,5 g und 3,75 g vorgesehen, von denen maximal zwei Wuchtelemente (z.B. zu je 3,75 g) über ein Befestigungselement an einem Halteelement festlegbar sind. Die Halteelemente unterscheiden sich hier dann in Gewichten zu 15 g (= 2 x (3,75 g + 3,75 g)), 30 g und 45 g, so dass hierüber selbst bei einer geringeren Anzahl von möglichen, durch die Verbindungsstellen der Bauteile definierten Wuchtpositionen (z.B. sechs) in 1,25 g Schritten Ausgleichswuchtmassen über lediglich drei unterschiedlich schwere Halteelemente und lediglich drei unterschiedlich schwere Wuchtelemente bereitgestellt werden können (vgl. auch Tabellen 3a bis 3d).

Alternativ ist für eine Abstufung der möglichen Wuchtmassen in gleichbleibenden Schritten eine Variante vorgesehen, bei der ein einzelnes Wuchtelement über das Befestigungselement an einem Halteelement anbringbar ist und dieses Wuchtelement ein Gewicht aufweist, das genau der Hälfe der minimalen Gewichtsdifferenz zwischen zwei unterschiedlich schweren Halteelementen entspricht. Hier gibt es dann z.B. ein oder mehrere unterschiedlich schwere Halteelemente (z.B. mit einem Netto-Mehrgewicht von 10 g je Gewichtsstufe) und ein Wuchtelement (z.B. mit einem Netto-Mehrgewicht von 5 g), wobei jeweils nur ein Halteelement und über das Befestigungselement ein Wuchtelement des Satzes unterschiedlicher Wuchtelemente an den Verbindungsstellen fixiert werden können. Indem das Netto-Mehrgewicht zwischen den Halteelementen genau dem Doppelten des Gewichts des bei Bedarf zusätzlich anbringbaren Wuchtelements entspricht, kann die Wuchtmasse in gleichbleibenden Abstufungen um den Betrag des Gewichts des Wuchtelementes erhöht werden (z.B. in Stufen zu 5 g).

In einem Ausführungsbeispiel nach der vorgenannten Variante (b) übersteigt bei Verwendung mehrerer unterschiedlich schwerer Wuchtelemente für ein Feinwuchten die minimale Gewichtsdifferenz zwischen zwei Halteelementen das Doppelte des maximalen Gesamtgewichts aller Wuchtelemente nur um genau den Betrag einer minimalen Gewichtsdifferenz zwischen unterschiedlich schweren Wuchtelementen. Beispielsweise beträgt eine minimale Gewichtsdifferenz unterschiedlich schwerer Halteelemente dann 12,5 g und eine minimale Gewichtsdifferenz zwischen unterschiedlichen Wuchtelementen 0,5 g. Das maximale Gesamtgewicht aller mit einem Befestigungselement fixierbaren Wuchtelemente soll hier dann 6 g betragen (12,5 g = 2 x 6 g + 0,5 g oder (12,5 g - 0,5 g)/2 = 6 g). Eine durch ein Wuchtelement oder mehrere Wuchtelemente mögliche zusätzliche Gewichtsdifferenz (6g) ist hier somit geringer als die Hälfte (6,25 g) der minimalen, d.h., der geringst möglichen Gewichtsdifferenz zwischen zwei unterschiedlich schweren Halteelementen (12,5 g). Oder eben mit anderen Worten ist hier die minimale Gewichtsdifferenz zwischen zwei Halteelementen (12,5 g) genau das Doppelte des maximalen Gesamtgewichts aller Wuchtelemente (2x6 g), die an einem Halteelement bestimmungsgemäß festlegbar sind, plus dem Betrag einer minimalen Gewichtsdifferenz (0,5 g) zwischen unterschiedlich schweren Wuchtelementen.

In einer anderen Variante ist vorgesehen, dass ein Satz von Wuchtelementen mit mindestens drei unterschiedlichen Gewichtsstufen für ein Feinwuchten bereitgestellt wird, bei dem eine Gewichtsdifferenz zwischen zwei Typen von Wuchtelementen unmittelbar aufeinanderfolgender Gewichtsstufen (zum Beispiel der Gewichtsstufe n und der Gewichtsstufe n-1) identisch ist und maximal einem Zehntel einer minimalen Gewichtsdifferenz zwischen zwei unterschiedlich schweren Halteelementen entspricht. Der Unterschied zwischen dem Gewicht eines Wuchtelements einer Gewichtsstufe (n) und dem Gewicht eines Wuchtelement einer nächsthöheren Stufe (n+1) ist somit stets kleiner als 1/10 einer minimalen Gewichtsdifferenz zwischen zwei verschieden schweren Halteelementen. So liegt beispielsweise in einer hierauf basierenden Ausführungsvariante der minimale Unterschied zwischen zwei verschiedenen schweren Halteelementen bei 12,5 g, während die größte Differenz zwischen zwei Gewichten zweier (Zusatz-) Wuchtelemente aufeinanderfolgende Gewichtsstufen bei maximal 1g liegt. So sind beispielsweise zweite Halteelemente (Haltelemente eines zweiten Typs) vorgesehen, die gegenüber den ersten Halteelementen (Halteelementen eines ersten Typs) ein Netto-Mehrgewicht von 12,5 g aufweisen sowie dritte Halteelemente (Haltelemente eines dritten Typs), die gegenüber den zweiten Halteelementen ein Netto-Mehrgewicht von 12,5 g (und damit gegenüber den ersten Halteelementen ein Mehrgewicht von 25 g) aufweisen. Die Gewichte der zusätzlichen, vorzugsweise standardisierten Wuchtelemente sind dabei in 0,5 g, 1 g, 2 g, 3 g, 4 g, 5 g und 6 g gestaffelt. Eine minimale Netto-Gewichtsdifferenz zwischen zwei unterschiedlich schweren Halteelementen liegt somit hier bei 12,5 g. Die maximale Netto-Gewichtsdifferenz zwischen zwei Wuchtelementen unmittelbar aufeinanderfolgende Gewichtsstufen liegt hier des weiteren bei 1g. Vorzugsweise sind ferner maximal 6 g an Gesamtmasse über ein Wuchtelement oder mehrere Wuchtelemente an einem Befestigungselement festlegbar.

Die Messung einer Unwucht im Bereich der Verbindung der mindestens zwei Gasturbinenbauteile oder einer Unwucht im Bereich der Verbindung zwischen Gasturbinenbauteil und Vorrichtungsbauteil wird beispielsweise mittels einer Auswuchtvorrichtung ausgeführt, die einem Nutzer Position, Anzahl und/oder Gewicht anzubringender Wuchtelemente und/oder Position und Gewicht anzubringender (respektive auszutauschender) Halteelemente anzeigt, um eine gemessene Unwucht auszugleichen. Hierfür ist in der Auswuchtvorrichtung beispielsweise eine Auswertelogik implementiert, die nicht nur die auszugleichende Gesamtunwucht und deren Position anzeigt, sondern auch einen Nutzer darüber informiert, welche und wie viele der zur Verfügung stehenden Wuchtelemente und Halteelemente zum Ausgleich der entsprechenden Unwucht an welcher der möglichen Verbindungsstellen angebracht oder ausgetauscht werden müssen. Hierbei berücksichtigt die Auswertelogik vorzugsweise auch, dass nur eine begrenzte Anzahl unterschiedlicher Typen und damit unterschiedlich schwerer Wuchtelemente und Halteelemente zur Verfügung stehen. Beispielsweise ist die Anzahl austauschbarer Halteelemente mit unterschiedlichem Gewicht auf drei und die Anzahl nutzbarer, standardisierter (Zusatz-) Wuchtelemente mit unterschiedlichen Gewichten auf unter acht, vorzugsweise auf sieben limitiert. So berücksichtigt die Auswertelogik beispielsweise, dass die für den Ausgleich einer Unwucht erforderliche Wucht- bzw. Korrekturmasse von 12g durch ein anderes Halteelement mit einem Netto-Mehrgewicht "Netto-Wuchtgewicht" von 12,5g an der gegenüberliegenden Position und durch ein Zusatzwuchtelement von 0,5g im Bereich der festgestellten Unwucht erlangt werden kann, um die gemessene Unwucht auszugleichen.

Alternativ kann selbstverständlich vorgesehen sein, dass die Auswuchtvorrichtung einem Nutzer lediglich die positionsbezogene Unwucht anzeigt und der Nutzer dann selbst anhand der zur Verfügung stehenden Verbindungsstellen und der zur Verfügung gestellten Gewichte der unterschiedlichen Halteelemente und (Zusatz-) Wuchtelemente - zum Beispiel mithilfe einer entsprechenden Tabelle - die notwendigen Elemente und Positionen ermittelt, um die gemessene Unwucht auszugleichen.

Die Erfindung ist offensichtlich bei unterschiedlichen Typen von Gasturbinen vorteilhaft einzusetzen. Eine mögliche Variante ist dabei insbesondere die Umsetzung in einem Gasturbinentriebwerk.

Weitere Vorteile und Merkmale der Erfindung werden bei der nachfolgenden Beschreibung von Ausführungsbeispielen anhand der Figuren deutlich.

Hierbei zeigen:
- Figur 1: in perspektivischer Ansicht ein Ausführungsbeispiel einer erfindungsgemäßen Baugruppe für das drehfeste Verbinden eines rotierenden Bauteils einer Hochdruckturbine in einem Gasturbinentriebwerk mit einer Halteplatte als Halteelement und vier hieran gehaltenen Gewindebolzen;
- Figur 2: ausschnittsweise eine Schnittdarstellung der über einen Gewindebolzen der Baugruppe der Figur 1 bereitgestellten Verbindung dreier Bauteile in der Hochdruckturbine;
- Figuren 3A-3B: verschiedene Ansichten der Halteplatte der Baugruppe der Figur 1;
- Figuren 4A-4B: verschiedene Ansichten einer zweiten, schwereren Halteplatte;
- Figuren 5A-5B: verschiedene Ansichten einer dritten, noch schwereren Halteplatte;
- Figur 6: eine Baugruppe der Figur 1 im bestimmungsgemäß montierten Zustand mit einem an die Halteplatte montiertem Zusatzwuchtelement;
- Figur 7: in mit der Figur 1 übereinstimmender Ansicht eine erfindungsgemäß ausgestaltete Baugruppe mit der zweiten Halteplatte gemäß den Figuren 4A und 4B und einem hieran festgelegten Zusatzwuchtelement;
- Figur 8A: eine Vorderansicht auf einen kreisringförmigen Flansch einer Radscheibe für die Hochdruckturbine mit hieran bestimmungsgemäß angeordneten Baugruppen mit je einer Halteplatte und vier Gewindebolzen zur drehfesten Verbindung mit einem weiteren rotierenden Turbinenbauteil;
- Figur 8B: Schnittdarstellung entlang der in der Figur 8A eingezeichneten Schnittlinie CA-CA zur Veranschaulichung der Befestigungselemente zur formschlüssigen Verbindung von einem Halteelement und einem Wuchtelement an mindestens einem Gasturbinenbauteil;
- Figur 8C: eine Rückansicht entlang der Turbinen- oder Rotationsachse mit Blick auf den kreisringförmigen Flansch der Radscheibe des Hochdruckverdichters;
- Figur 8D: Schnittdarstellung entlang der in der Figur 8C eingezeichneten Schnittlinie AC-AC;
- Figur 9: den kreisringförmigen Flansch der Figur 8A unter Veranschaulichung der sechs möglichen Verbindungsstellen für je eine erfindungsgemäß ausgestaltete Baugruppe und unter exemplarischer Darstellung zweier Unwuchtstellen;
- Figur 10: schematisch ein Ablaufdiagramm für ein erfindungsgemäßes Auswuchtverfahren;
- Figur 11: in Schnittdarstellung und ausschnittsweise einen Teil einer Halteplatte mit zwei hieran anliegenden Bolzenköpfen, die über einen Steg gegen eine Verdrehung gesichert sind, der an seinem Fuß zwei sich gegenüberliegende Einkerbungen aufweist;
- Figuren 12A-12D: die verschiedene Ansichten einer Variante einer Baugruppe mit einer Halteplatte für zwei Gewindebolzen;
- Figur 13: ausschnittsweise und in Schnittdarstellung eine Auswuchtvorrichtung, die eine Verdichterwelle für das Auswuchten von Gasturbinenbauteilen simuliert, mit Hervorhebung zweier Wuchtebenen am Hochdruckturbinenrotor;
- Figur 14: ausschnittsweise und in Schnittdarstellung eine Hochdruckturbinenrotor eines Gasturbinentriebwerks mit Hervorhebung zweier Wuchtebenen.

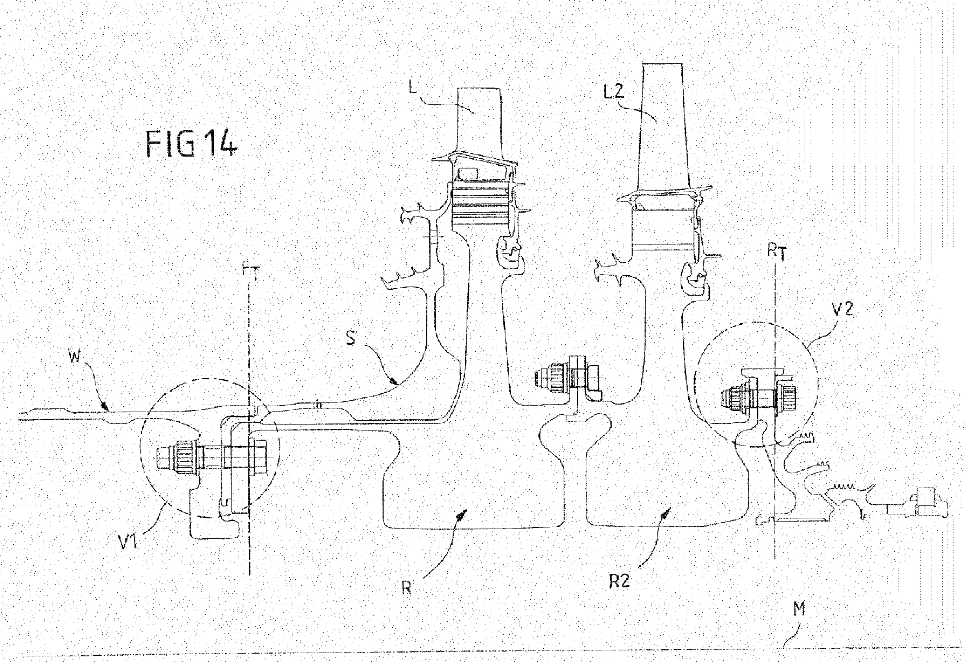

Die Figur 14 zeigt ausschnittsweise ein Gasturbinentriebwerk in Schnittdarstellung im Bereich der Hochdruckturbine. Die Hochdruckturbine ist hierbei entlang einer Triebwerksachse M hinter dem Hochdruckverdichter angeordnet. Drehfest miteinander verbundene (Rotor-) Radscheiben R und R2 tragen hierbei in an sich bekannter Weise Laufschaufeln L und L2. An einem axial hinteren Ende ist die eine Radscheibe R2 über einen kreisringförmigen Flansch mit einem ebenfalls rotierenden Turbinenbauteil, zum Beispiel einer Lagerwelle, verbunden. Die drehfeste Verbindung erfolgt in einem Verbindungsbereich V2. Die drehfest mit der Radscheibe R2 verbundene weitere Radscheibe R ist in einem Verbindungsbereich V1 an ihrem axial vorderen Ende drehfest mit einer Abdeckscheibe S und einem weiteren Wellenteil, in diesem Beispiel der Verdichterwelle W des Gasturbinentriebwerks verbunden. Die Verbindung in den Verbindungsbereichen V1 und V2 erfolgt jeweils über mehrere entlang des Umfangs verteilt angeordnete Gewindebolzen. Um hierbei im Betrieb des Gasturbinentriebwerks Vibrationen und Schwingungen bei den sich extrem schnell drehenden Radscheiben R und R2 zu vermeiden, werden die Verbindungsbereiche V1 und V2 aufwendig in Wuchtebenen F_{T} und R_{T} auf eventuelle Unwucht geprüft. Werden in diesen Wuchtebenen F_{T} und R_{T} Unwuchten festgestellt, werden diese über Wuchtelemente ausgeglichen, um eine möglichst schwingungsfreie Rotation der Verdichter- und Turbinenwelle zu erreichen.

Im Zuge der erfindungsgemäßen Lösung ist hierbei insbesondere zur Verbesserung eines Auswuchtverfahrens ein Halteelement zur Anbringung mehrerer Stufenbolzen und deren Sicherung gegen ein Verdrehen bei der Montage vorgeschlagen, das zusätzlich selbst als Wuchtelement dienen kann und an dem in einfacher Weise und insbesondere ohne zusätzliche Befestigungselemente Zusatzwuchtelemente festgelegt werden können.

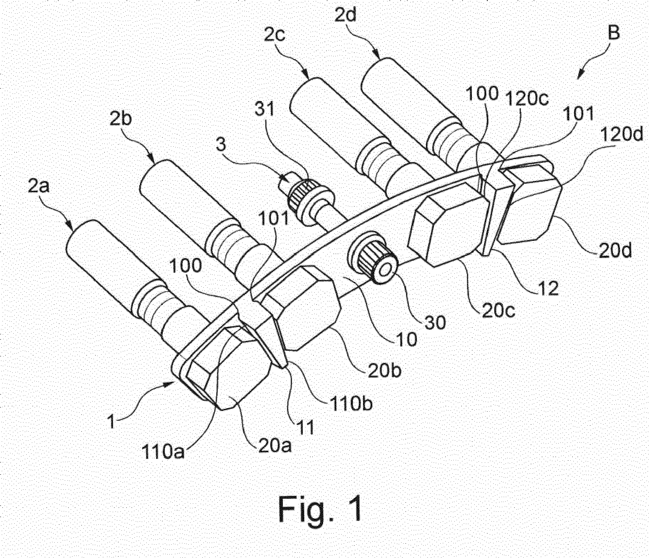

So zeigt die Figur 1 exemplarisch eine Befestigungsbaugruppe B für die drehfeste Verbindung der Radscheibe R, der Abdeckscheibe S und der Verdichterwelle W miteinander. Über sechs dieser Befestigungsbaugruppen B sind die drei genannten Bauteile R, S, W über jeweils kreisringförmig ausgestrahlte Flansche RF, SF und WF drehfest miteinander verbunden. Eine Befestigungsbaugruppe B weist hierbei ein Halteelement in Form einer Halteplatte 1 auf, die eine kreissegmentartige Basis 10 definiert. An dieser Basis 10 sind - wie sich auch anhand der Zusammenschau der Figuren 1, 2 und 3A-3B ergibt - paarweise Bolzenöffnungen 14a, 14b und 15a, 15b vorgesehen. Durch jede dieser Bolzenöffnungen 14a, 14b, 15a oder 15b wird ein Verbindungselement in Form eines Hammerkopfbolzens oder Gewindebolzen 2a, 2b, 2c oder 2d mit einem T-förmigen Kopf gesteckt. Ein Bolzenkopf 20a, 20b, 20c und 20d eines Gewindebolzens 2a, 2b, 2c oder 2d liegt hierbei dann an der Basis 10 an. Die Gewindeabschnitte der Gewindebolzen 2a, 2b, 2c und 2b sind durch entsprechende Öffnungen in den Turbinenbauteilen R, S und W geführt. Durch aufgeschraubte Muttern 21 werden dann die Turbinenbauteile R, S und W aneinander fixiert und drehfest miteinander verbunden.

Um beim Aufschrauben der Muttern 21 ein Mitdrehen der Bolzen 2a bis 2d zu verhindern, bildet die Halteplatte 1 an ihrer Basis vorstehende Stege 11 und 12 für jeweils ein Paar von Gewindebolzen 2a-2b und 2c-2d aus. Die einzelnen Stege 11 und 12 stehen hierbei erhaben an der Basis 10 hervor und weisen eine Keilform auf. Das verjüngende Ende dieses Keils weist dabei in Richtung der Rotationsachse, um die die Bauteile R, S und W im Betrieb des Gasturbinentriebwerks rotieren. Mit anderen Worten verbreitern sich die Stege 11 und 12 radial nach außen. Die Abstände eines Paares von Öffnungen 14a, 14b oder 15a, 15b sind hierbei so auf die Bolzenköpfe 20a, 20b und 20c, 20d abgestimmt, dass der zwischen zwei Öffnungen 14a, 14b oder 15a, 15b ausgeformte Steg 11 oder 12 die in die Bolzenöffnungen 14a, 14b und 15a, 15b eingesteckten Gewindebolzen 2a bis 2d gegen eine Verdrehung sichert.

Jeder Steg 11 oder 12 weist hierfür Seitenflächen 110a, 110b oder 120c, 120d auf, die jeweils einem angrenzenden Bolzenkopf 20a, 20b oder 20c, 20d zugewandt sind. An diesen Seitenflächen 110a, 110b oder 120c, 120d liegt oder schlägt ein Bolzenkopf 20a, 20b oder 20c, 20d an, um eine Verdrehung des jeweiligen Gewindebolzen 2a bis 2d in seinem in die Halteplatte 1 eingesteckten Zustand zu verhindern. Am Fuß jeden Steges 11 oder 12 ist beiderseits im Bereich der Basis 10 jeweils nach Art eines Freistichs eine längserstreckte und im bestimmungsgemäß verbauten Zustand radial verlaufende Einkerbung 100 oder 101 vorgesehen. Über diese Einkerbungen 100 und 101 an den rippenartig vorstehenden Stegen 11 und 12 können die jeweiligen Bolzenköpfe 20a bis 20d im Bereich des jeweiligen Steges 11 oder 12 problemlos flächig an der Basis 10 aufliegen. Gleichzeitig ist ohne zusätzlichen Bauraumbedarf für die Halteplatte 1 sichergestellt, dass die Bolzenköpfe 20a bis 20d definiert im Bereich der Seitenflächen 110a, 110b und 120c, 120d der Stege 11 und 12 vorliegen, um die Gewindebolzen 2a bis 2d gegen eine Verdrehung zu sichern.

Um eine Halteplatte 1 mit oder ohne hieran bereits festgelegte Gewindebolzen 2a bis 2d an dem Flansch RF der Radscheibe R oder an den Flanschen RF und SF der Turbinenbauteile R, S zu halten, ist an der Basis 10 eine Befestigungsöffnung 13 für ein Befestigungselement der Befestigungsbaugruppe B in Form eines Befestigungsbolzen 3 vorgesehen. Über diesen Befestigungsbolzen 3 und eine hierauf aufgeschraubte Mutter 31 kann die Halteplatte 1 an dem Flansch RF der Radscheibe R fixiert werden und es können die Flansche RF und SF der Radscheibe R und der Abdeckscheibe S miteinander verbunden werden. Derart können mit den Befestigungselementen 3 die Turbinenbauteile R und S zusammen mit den Halteelementen 1 vormontiert werden. Die anschließende Verschraubung der Verdichterwelle W und der Turbinenwelle, die unter anderem die Radscheiben R, R2 und die Abdeckscheibe S umfasst, erfolgt über die Gewindebolzen 2a bis 2d und die jeweils zugehörigen Muttern 21.

Ein Kopf 30 des Befestigungsbolzens 3 liegt hierbei an derselben Seite der Basis 10 vor wie die Bolzenköpfe 20a bis 20d der Gewindebolzen 2a bis 2d. Es sei aber darauf hingewiesen, dass dies selbstverständlich nicht zwingend ist und z.B. auch vorgesehen sein kann, die Befestigungsbolzen 3 so zu verbauen, dass der jeweilige Schraubenkopf auf dem Bauteil S und die Mutter auf der Basis 10 aufliegt. Die Befestigungsöffnung 13 für den Befestigungsbolzen 3 ist hierbei in etwa mittig zwischen den zwei Paaren von Bolzenöffnungen 14a, 14b und 15a, 15b ausgebildet. Der Kopf 30 des Befestigungsbolzens 3 steht somit in etwa mittig zwischen den zwei Paaren von Bolzenköpfen 20a/20b und 20c/20d an der Basis 10 hervor, wenn die Befestigungsbaugruppe B bestimmungsgemäß montiert ist. Vorliegend liegen eine Befestigungsöffnung 13 und die Bolzenöffnungen 14a, 14b und 15a, 15b auf einer Kreislinie um die Triebswerksachse M. Dies ist aber nicht zwingend. So können die radialen Positionen der Befestigungsöffnung 13 und der Bolzenöffnungen 14a, 14b und 15a, 15b auch voneinander abweichen.

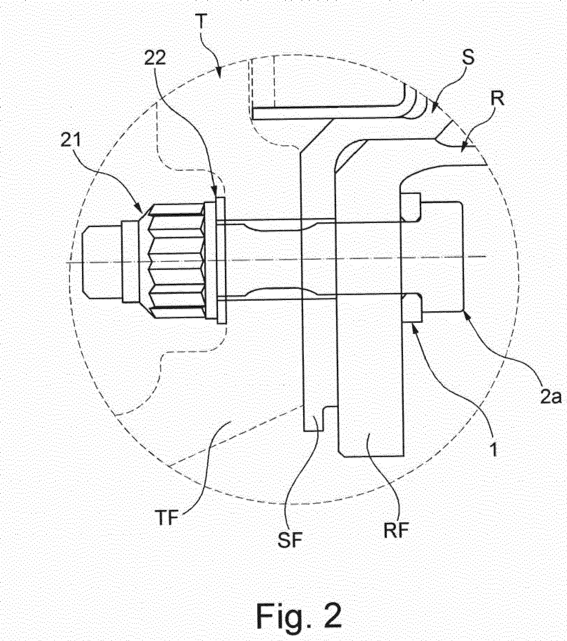

Vorliegend ist die Befestigungsbaugruppe B zur Anbringung an dem Flansch RF der Radscheibe R im Bereich einer in axialer Richtung hinteren Stirnseite vorgesehen. Auf der in axialer Richtung vorderen Seite, an der die Muttern 21 auf die durchgesteckten Gewindebolzen 2a bis 2d aufgeschraubt werden, ist entsprechend der Schnittdarstellung der Figur 2 noch eine Kratzschutzplatte 22 vorgesehen. Diese Kratzschutzplatte 22 verhindert beim Aufdrehen der jeweiligen Mutter 21 ein Zerkratzen der Flanschoberfläche des Flansches WF der Verdichterwelle W.

Im Zuge der erfindungsgemäßen Lösung sind vorliegend unterschiedliche Typen von Halteplatten 1, 1.1 und 1.2 mit unterschiedlichen Gewichten bereitgestellt. Darüber hinaus ist jeder Befestigungsbolzen 3 nicht nur dazu vorgesehen, eine Halteplatte 1, 1.1 oder 1.2 bestimmungsgemäß vorzumontieren und vorzupositionieren und im vorliegenden Beispiel die Flansche RF und SF der Bauteile R und S aneinander zu fixieren. Vielmehr ist an jedem Befestigungsbolzen 3 auch wenigstens ein vorzugsweise hülsenförmiges (Zusatz-) Wuchtelement 4 festlegbar, um eine eventuelle Unwucht in der Wuchtebene F_{T} auszugleichen. Für das Auswuchten können aber an einem Befestigungsbolzen 3 auch unterschiedlich geformte Wuchtelemente festlegbar sein. Die Anzahl der unterschiedlich Formen und Gewichte ist vorliegend aber standarisiert und damit limitiert.

Die in etwa mittige Anordnung des Befestigungsbolzens 3 und die bezogen auf eine durch den Mittelpunkt der jeweiligen Bolzenöffnung 13 und radial zur Rotationsachse M verlaufende Symmetrieachse symmetrische Gestaltung der Halteplatten 1, 1.1 und 1.2 erlaubt eine Änderung des Wuchtgewichts im Bereich des Massenschwerpunkts einer Halteplatte 1, 1.1 oder 1.2. Mit anderen Worten bleibt der Massenschwerpunkt in Umfangsrichtung erhalten, auch wenn die jeweilige Halteplatte 1, 1.1, 1.2 durch eine andere Halteplatte 1.1, 1.2, 1 ausgetauscht oder mit einem oder mehreren zusätzlichen Wuchtelementen 4 kombiniert wird. Der Befestigungsbolzen 3 stellt somit bevorzugt eine Anbringungsstelle für mindestens ein zusätzliches Wuchtelement 4 im Bereich des Massenschwerpunktes jeder Halteplatte 1, 1.1, 1.2 bereit. Hierdurch lässt sich ein Auswuchtverfahren leichter automatisieren. Insbesondere bei einer Erhöhung eines Wuchtgewichts durch Austausch einer Halteplatte 1, 1.1, 1.2 und/oder Anbringung eines Wuchtelements 4 an einer Halteplatte 1, 1.1, 1.2 tritt keine (relevante) Veränderung des Massenschwerpunktes (in Umfangsrichtung) auf, die für ein optimales Wuchtergebnis berücksichtigt werden müsste.

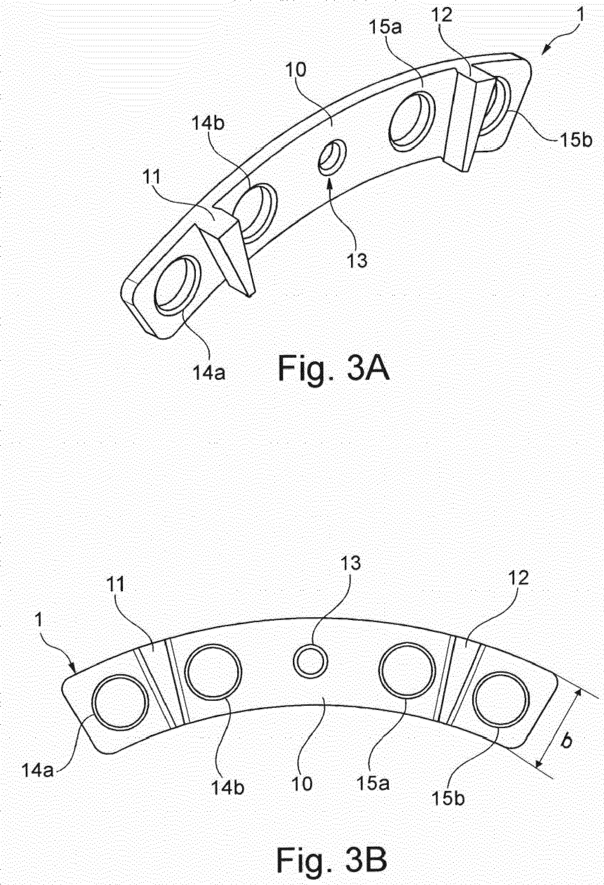

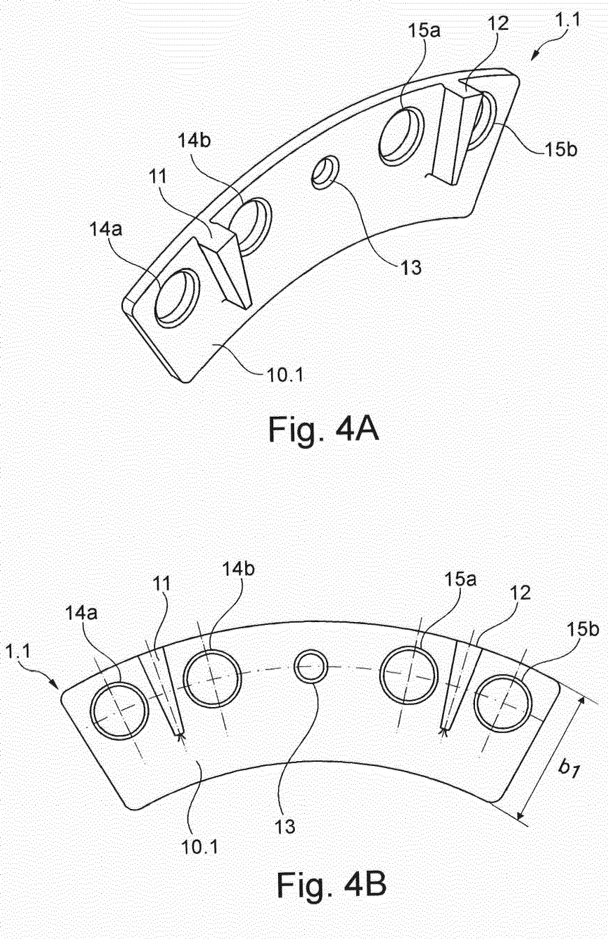

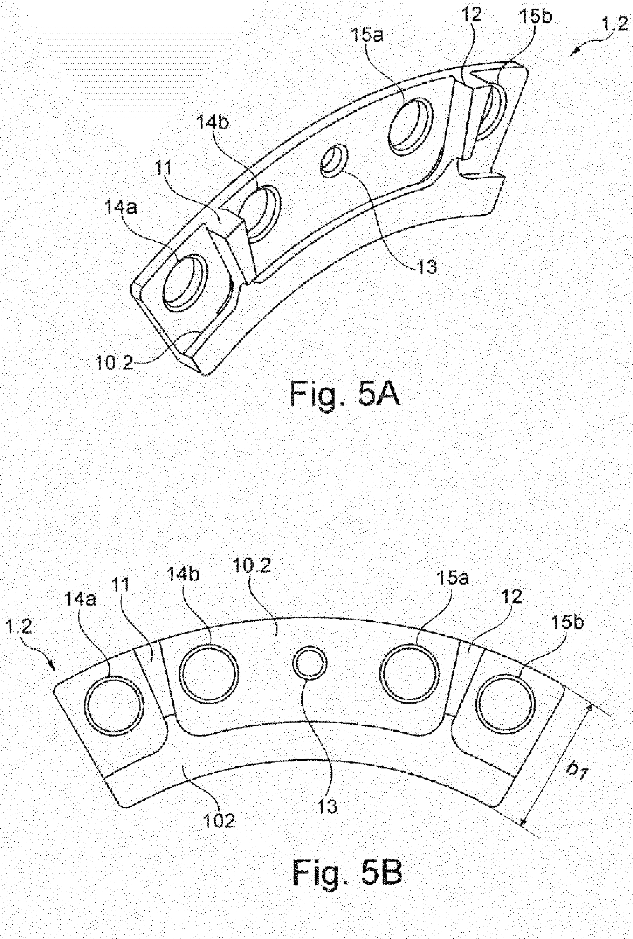

Die Figuren 4A, 4B und 5A-5B zeigen dabei in mit den Figuren 3A und 3B übereinstimmenden Ansichten zwei weitere Typen von zweiten und dritten Halteplatten 1.1 und 1.2, die über unterschiedlich ausgestaltete Basen 10.1 und 10.2 unterschiedlich schwer ausgelegt sind. Während eine zweite Halteplatte 1.1 der Figuren 4A und 4B gegenüber einer ersten Halteplatte 1 in radialer Richtung verbreitert ist und damit eine Breite b1 aufweist, die größer ist als eine Breite b der ersten Halteplatte 1 nach den Figuren 3A und 3B, ist eine dritte Halteplatte 1.2 der Figuren 5A und 5B gegenüber der Variante der Figuren 4A und 4B lediglich lokal aufgedickt. Die Halteplatten 1.1 und 1.2 der Figuren 4A-4B und 5A-5B weisen somit identische Breiten b1 und Längen (in Umfangsrichtung) auf. Die schwerere Halteplatte 1.2 ist aber an einem radial innen liegenden Bereich der Basis 10.2 mit einer Aufdickung 102 versehen, die an der Basis 10.2 erhaben vorsteht. Alle Halteplatten 1, 1.1 und 1.2 haben identische Umfangslängen, um die Austauschbarkeit der Halteplatten 1, 1.1, 1.2 untereinander zu gewährleisten. Zudem haben alle Halteelemente 1, 1.1, 1.2 eine identische Dicke im Kontaktbereich der Verbindungselemente in Form der Gewindebolzen 2a bis 2d, wodurch eine Änderung der Klemmlänge der Verbindungselemente vermieden wird.

Die Gewichte der einzelnen Halteplatten 1, 1.1 und 1.2 unterscheiden sich jeweils, beispielsweise um 12,5 g. Demgegenüber sind die zur Anbringung über den Befestigungsbolzen 3 vorgesehenen Zusatzwuchtelemente 4 deutlich leichter und erreichen einzeln maximal ein Gewicht von 6 g.

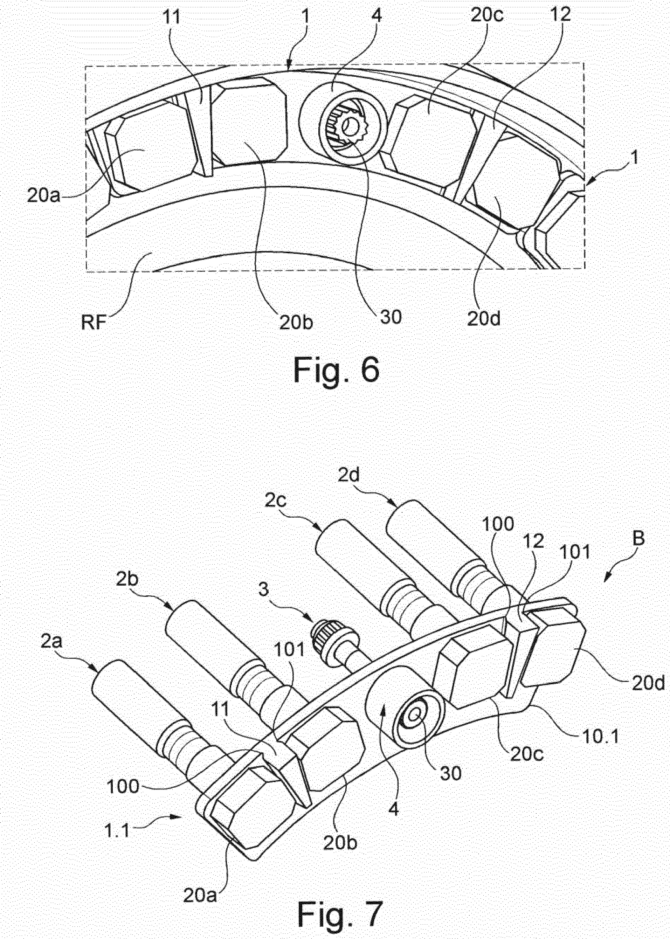

In einer bevorzugten Variante stehen sieben unterschiedliche Wuchtelemente 4 zur Anbringung an einem Befestigungsbolzen 3 zur Verfügung. Diese weisen jeweils ein Gewicht von 0,5 g, 1 g, 2 g, 3 g, 4 g, 5 g und 6 g auf. In Kombination mit den unterschiedlich schweren Halteplatten 1, 1.1 und 1.2 können damit in Abstufungen von 0,5 g Wuchtgewichte bis zu einem Gesamtgewicht von 31 g zum Ausgleich von Unwuchten befestigt werden. Diese Abstufung ist nicht nur relativ feingliedrig, sondern gestattet trotz der überschaubaren Anzahl von unterschiedlichen Zusatzwuchtelementen 4 und Halteplatten 1, 1.1 und 1.2 bei vergleichsweise wenigen (vorliegend sechs) Verbindungsstellen für die Anbringung von Halteplatten 1, 1.1 und 1.2 einen effektiven und genauen Ausgleich auch von größeren Unwuchten. Eine Verbindungsstelle an dem Flansch RF der Radscheibe R ist hierbei so ausgestaltet, dass an den entlang des Umfangs vorgesehenen sechs Verbindungsstellen für die Anordnung einer Halteplatte 1 auch alternativ die schwereren Halteplatten 1.1 oder 1.2 angeordnet werden können. Die Abstände der Bolzenöffnungen 14a, 14b und 15a, 15b untereinander sowie zu einer Befestigungsöffnung 13 für den Befestigungsbolzen 3 sind hierbei bei den unterschiedlichen Halteplatten 1,1.1 und 1.2, wie anhand der Figuren 6 und 7 veranschaulicht ist, zueinander identisch, sodass die Halteplatten 1, 1.1 und 1.2 problemlos gegeneinander ausgetauscht werden können und (in Bezug auf ihre Befestigungsmöglichkeit, d.h., das Vorsehen einer Durchgangsöffnung für den Befestigungsbolzen 3 identisch ausgestaltete) Zusatzwuchtelemente 4 über den jeweiligen Befestigungsbolzen 3 an einer Halteplatte 1, 1.1 oder 1.2 festgelegt werden können.

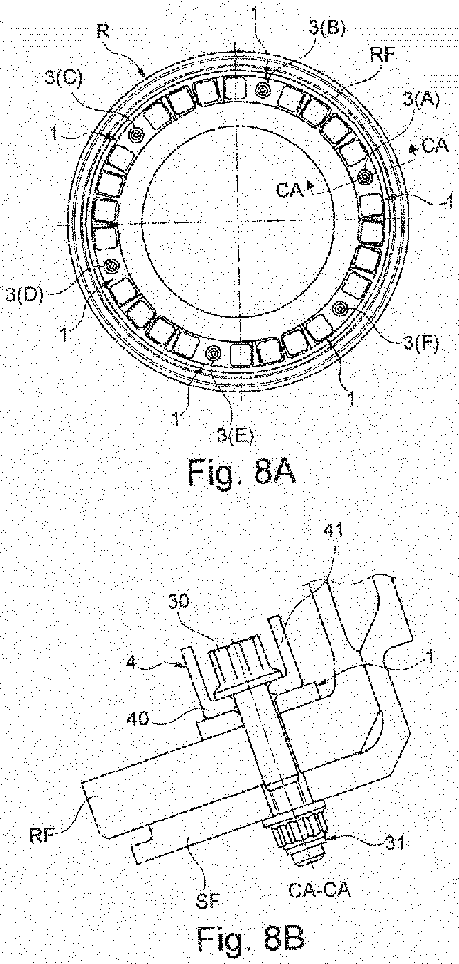

Entsprechend der Figur 8A sind in dem vorliegenden Ausführungsbeispiel sechs jeweils um 60° zueinander beabstandete Verbindungsstellen an dem Flansch RF der Radscheibe R definiert. An jeder Verbindungsstelle ist eine Durchgangsöffnung für einen Befestigungsbolzen 3 vorgesehen, um hierüber eine Halteplatte 1, 1.1 oder 1.2 zu positionieren. Entsprechend der Schnittdarstellung der Figur 8B durchgreift hierbei der Befestigungsbolzen 3 nicht nur den Randflansch RF der Radscheibe R, sondern auch den Flansch SF der Abdeckscheibe S. Derart kann beispielsweise eine Halteplatte 1 an den bereits miteinander verbundenen Bauteilen R und S über einen verschraubten Befestigungsbolzen 3 gehalten sein. Die Abdeckscheibe S ist vorliegend gegenüber der Radscheibe R axial vorgespannt, um einen Kontakt beider Bauteile R, S im Bereich des Scheibenkopfes auch bei ungünstigen Bauteiltoleranzen sicherzustellen. Insofern werden im vorliegenden Beispiel über die Befestigungsbolzen 3 nicht nur die Halteplatten 1 am Flansch RF gehalten, sondern auch beide Flansche RF und SF zusammengehalten und eine axiale Verschiebung des Flansches SF der Abdeckscheibe S relativ zu dem Flansch RF der Radscheibe R verhindert, bevor deren drehfeste Verbindung mit der Verdichterwelle W an deren Flansch WF erfolgt. An dem Flansch WF der Verdichterwelle W ist dann beispielsweise lediglich eine Aussparung oder Öffnung für die Aufnahme der auf den Befestigungsbolzen 3 aufgeschraubten Mutter 31 ausgebildet. Im vorliegenden Fall sind alle im Flansch WF der Verdichterwelle W ausgebildeten Aussparungen oder Öffnungen identisch, so dass die Anzahl der Positionierungsmöglichkeiten (in Umfangsrichtung) zwischen beiden Wellenteilen (Verdichter und Turbine) nicht eingeschränkt wird.

Anhand der Figur 8B ist ferner auch der Aufbau eines Zusatzwuchtelements 4 näher veranschaulicht. Ein solches Zusatzwuchtelement 4 weist jeweils eine Basis 40 auf, die über den Kopf 30 des Befestigungsbolzens 3 formschlüssig an der Halteplatte 1 gehalten ist. Je nach Größe und Gewicht des Zusatzwuchtelements 4 kann der Kopf 30 des Befestigungsbolzens 3 teilweise oder vollständig in einem Hülsenabschnitt 41 des Zusatzwuchtelements 4 aufgenommen sein. Alternativ kann das Wuchtelement auch die Form einer Unterlegscheibe haben, wodurch die Fixierung mehrerer Wuchtelemente 4 an einem Befestigungselement möglich oder zumindest vereinfacht ist. Die Wuchtelemente sind vorliegend Standard-Wuchtelemente, so dass insgesamt nur zwei zusätzliche maßgeschneiderte, d.h., z.B. individuell für die erfindungsgemäße Lösung angepasste, schwerere Halteelemente in Form der Halteplatten 1.1 und 1.2 erforderlich sind, um ein Auswuchten über eine verhältnismäßig große Bandbreite zu ermöglichen.

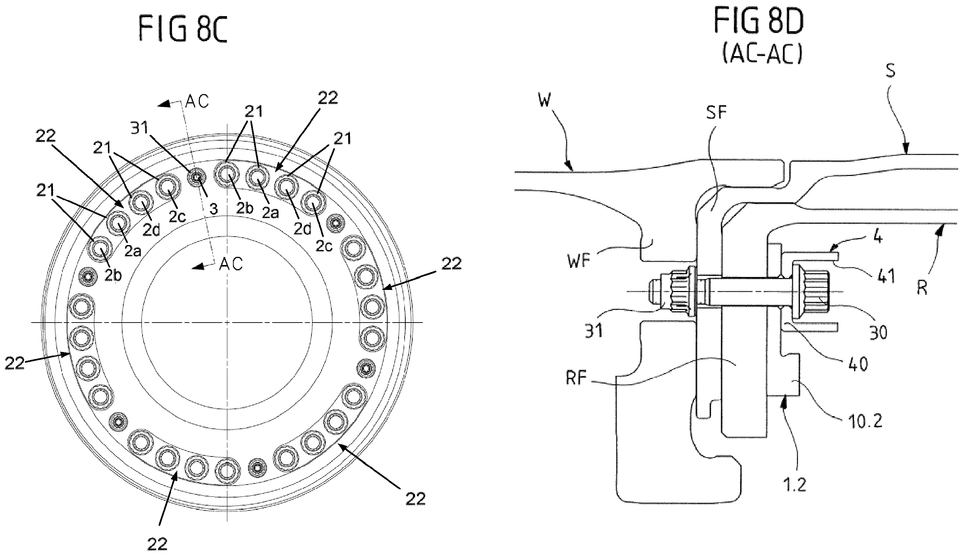

Mit den Figuren 8C und 8D wird in Ergänzung zu den Figuren 8A und 8B veranschaulicht, wie über den jeweiligen Befestigungsbolzen 3 die zugehörige Halteplatte, hier z.B. eine Halteplatte 1.2 entsprechend den Figuren 5A und 5B, an dem Flansch RF der Radscheibe R fixiert ist und die beiden Flansche RF und SF der Radscheibe R und der Abdeckscheibe S miteinander verbunden sind. Hierbei zeigt die Figur 8C die für die Muttern 21 vorgesehenen Kratzschutzplatten 22, die jeweils vier Gewindebolzen 2b, 2a und 2d, 2c zweier nebeneinander liegender Halteplatten zugeordnet sind. Zwischen zwei Kratzschutzplatten 22 ist jeweils eine Mutter 31 für einen Befestigungsbolzen 3 ersichtlich. Die auf einer Seite vorgesehenen Kratzschutzplatten 22 verbinden zwei Gewindebolzen 2b, 2a einer ersten Halteplatte und zwei Gewindebolzen 2d, 2c einer zweiten Halteplatte, wobei die ersten und zweiten Halteplatten auf einer gegenüberliegenden Seite vorgesehen sind. Die auf der einen Seiten vorgesehenen Kratzschutzplatten 22 sind somit in Umfangsrichtung paarweise zu den auf der gegenüberliegenden Seite vorgesehenen Halteplatten versetzt angeordnet.

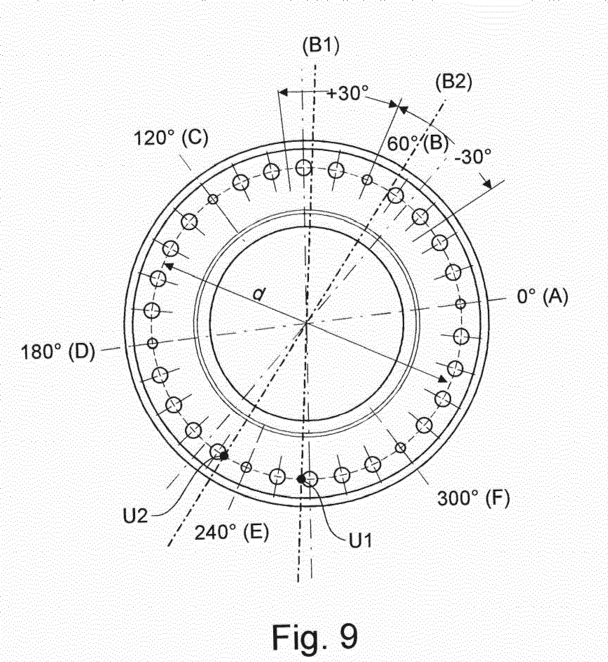

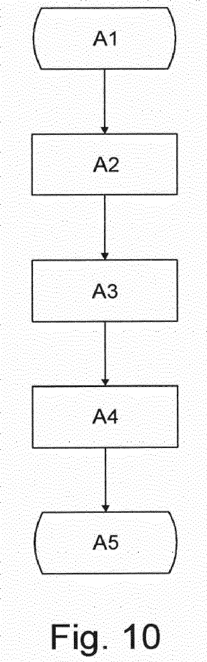

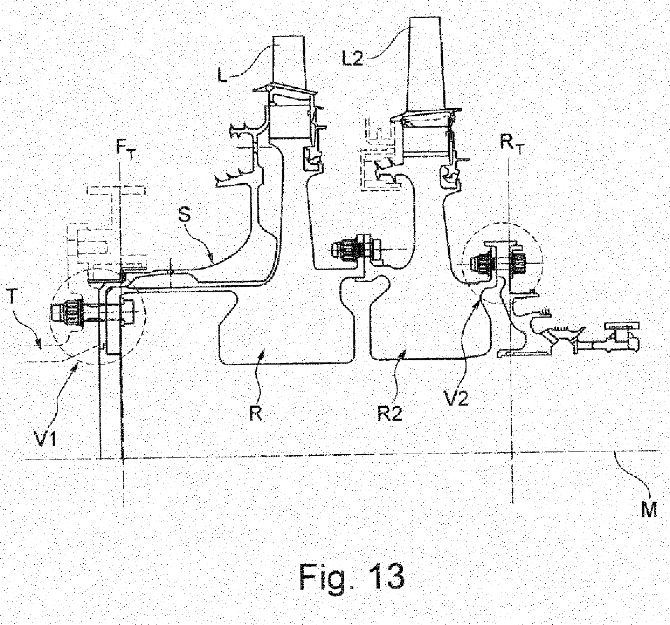

Anhand der Figuren 9 und 10 soll nachfolgend noch die Durchführung eines Auswuchtverfahrens auf Basis der erfindungsgemäßen Lösung veranschaulicht werden. Hierbei ist in der Figur 9 zunächst der Flansch RF der Radscheibe R mit den sechs äquidistant zueinander kann an dessen Umfang vorgesehenen Befestigungsstellen für die Halteplatten 1, 1.1 oder 1.2 veranschaulicht. Hierbei sind dementsprechend Verbindungsstellen (A) bis (F) bei 0°, 60°, 120°, 180°, 240° und 300° gezeigt. Im Zuge eines möglichen erfindungsgemäßen Auswuchtverfahrens werden vorliegend die Halteplatten 1 über ihre Befestigungsbolzen 3 an den Flanschen RF und SF fixiert, so dass die Flansche RF und SF hierüber miteinander verbunden sind. Die komplett montierte Turbinenwelle mit den Gasturbinenbauteilen S, R, R2, L, L2 und der Lagerwelle bestückt mit mehreren (vorliegend sechs) identischen Halteplatten 1 am Flansch RF der Radscheibe R wird anschließend über mindestens zwölf Gewindebolzen 2a bis 2d mit der Verdichterwelle W oder - entsprechend der Figur 13 - mit einem Vorrichtungsbauteil T eines entsprechenden Simulators verbunden und anschließend auf einer Auswuchtvorrichtung in Form einer Wuchtmaschine aufgenommen und eingerichtet. Die Figur 13 zeigt hierbei in mit der Figur 14 weitestgehend übereinstimmender Schnittansicht ausschnittsweise eine Auswuchtvorrichtung, in der die Turbinenwelle mit dem Vorrichtungsbauteil T, welches eine Verdichterwelle W simuliert, verbindbar ist. In der Auswuchtvorrichtung wird insbesondere gemessen, ob in der Wuchtebene F_{T} entsprechend der Figur 13 oder der Figur 14 eine Unwucht vorliegt. Nach dem Start des Auswuchtverfahrens in einem Schritt A1 entsprechend der Figur 10 erfolgt demgemäß zunächst die Messung einer Unwucht in einem Schritt A2.

In einem nachfolgenden Schritt A3 gibt die Auswuchtvorrichtung aus, ob und wo eine Unwucht vorliegt. Hierbei werden stets die Lage in Umfangsrichtung {°} und der Betrag der Unwucht {g*mm} gemessen. Somit kann die Unwucht auch als ein Vektor dargestellt werden. In der Figuren 9 sind exemplarisch zwei mögliche Unwuchtstellen U1 bei 260° (gerechnet von der Verbindungsstelle (A) entgegen dem Uhrzeigersinn) und U2 bei 230° eingetragen.

Anhand der ausgegebenen Unwucht in [g•mm] und der ausgegebenen Unwuchtposition kann ein Nutzer nun durch geeignete Kombination der zusätzlich zur Verfügung gestellten zwei weiteren Typen von Halteplatten 1.1 und 1.2 sowie den bereitgestellten Satz von Zusatzwuchtelementen 4 die festgestellte Unwucht ausgleichen. In einer möglichen Ausführungsvariante ist bereits in der Auswuchtvorrichtung eine entsprechende Auswertelogik hinterlegt, um dem Nutzer direkt Anzahl und Position auszutauschender Halteplatten 1 und/oder Anzahl, Position und/oder Gewicht anzubringender Zusatzwuchtelemente 4 anzuzeigen.

Wird beispielsweise an der Unwuchtstelle U1 eine Unwucht von 2450 g•mm bei 260° festgestellt, sind die Halteplatten 1 an den Verbindungsstellen (B) und (C) durch Halteplatten 1.1 mit einem Netto-Mehrgewicht ("Netto-Wuchtgewicht") von 12,5 g zu ersetzen. Ferner ist an den unveränderten Halteplatten an der Verbindungsstelle (A) ein Zusatzwuchtelement von 2 g und an der Verbindungsstelle (D) ein Zusatzwuchtelement von 0,5 g vorzusehen. Darüber hinaus ist an der ausgetauschten Halteplatte 1.1 an der Verbindungsstelle (B) ein Zusatzwuchtelement 4 mit einem Gewicht von 6 g vorzusehen:

**(Tabelle 1)**

| | (A) | (B) | (C) | (D) | (E) | (F) | GesamtMasse |
|---|---|---|---|---|---|---|---|
| Auszugleichende Unwucht 2450g•mm bei 260° | 2g | 12,5g +6g | 12,5g | 0,5g | - | - | 33,5g |

Durch die Festlegung von insgesamt 33,5 g (Netto-)Ausgleichsmasse an den Positionen (A) bis (D) wird ein Korrekturvektor mit dem Betrag von 2450 g•mm bei einem Winkel von 80.5° erzeugt, wodurch die gemessene Anfangsunwucht bis auf 20,7 g•mm (Restunwucht) korrigiert werden kann.

Wird an der Unwuchtstelle U2 eine Unwucht von 4700 g•mm festgestellt, ist diese über den Austausch der Halteplatten 1 an den Verbindungsstellen (A) und (B) insbesondere durch Halteplatten 1.2 des dritten Typs mit einem Netto-Mehrgewicht ("Netto-Wuchtgewicht") von 25 g auszugleichen, wobei diese jeweils mit Zusatzwuchtelement von 0,5 g (Verbindungsstelle (A)) und 6 g (Verbindungsstelle (B)) versehen werden müssen. Darüber hinaus wäre an der Verbindungsstelle (C) anstatt der (Standard-) Halteplatte 1 eine Halteplatte 1.1 des zweiten Typs mit einem Mehrgewicht von 12,5 g und ein Zusatzwuchtelement 4 von 3 g vorzusehen. An der Verbindungsstelle (F) ist darüber hinaus ein Zusatzwuchtelement 4 von 0,5 g anzuordnen:

**(Tabelle 2)**

| | (A) | (B) | (C) | (D) | (E) | (F) | GesamtMasse |
|---|---|---|---|---|---|---|---|
| Auszugleichende Unwucht 4700g•mm bei 230° | 25g +0,5g | 25g +6g | 12,5g +3g | - | - | 0,5g | 72,5g |

Durch die Festlegung von insgesamt 72,5 g (Netto-)Ausgleichsmasse an den Positionen (A), (B), (C) und (F) wird ein Korrekturvektor mit dem Betrag von 4685g*mm bei einem Winkel von 49.9° erzeugt, wodurch die gemessene Anfangsunwucht bis auf 16,3 g•mm (Restunwucht) korrigiert werden kann.

Eine aus der Figur 9 jeweils ersichtliche Position (B1), (B2) ist in diesem Beispiel diejenige Position, die der jeweiligen Unwucht U1 oder U2 genau gegenüberliegt. Mit anderen Worten ist eine Position (B1) oder (B2) nicht festgelegt, sondern variabel, d. h. abhängig von der Winkellage der gemessenen Unwucht. Die Position (B) für das Anbringen der Ausgleichswuchtmasse weist hierbei den geringsten Winkelversatz zu der jeweiligen Position (B1) oder (B2) auf.

Wie die vorgenannten Beispiele anschaulich zeigen, kann in der vorliegenden Variante bei einer vergleichsweise geringen Anzahl von nur sechs wohl definierten Verbindungsstellen für die drei Halteplatten 1, 1.1 und 1.2 mit unterschiedlichen Wuchtgewichten und einer geringen Anzahl (hier: sieben) von fein abgestuften Zusatzwuchtelementen 4 ein sehr präziser Ausgleich von Unwuchten erfolgen. Nach der Anbringung der entsprechenden Zusatzwuchtelemente 4 und einem eventuellen Austausch von Halteplatten 1 durch schwerere Halteplatten 1.1 oder 1.2 in einem Verfahrensschritt A4 endet dann das Auswuchtverfahren in einem Schritt A5 und die derart ausgerüsteten Bauteile können endgültig fixiert werden.

Die Klemmlängen der jeweiligen Verbindungselemente - hier in Form der Gewindebolzen 2a bis 2d - bleiben über die unterschiedlich schweren Halteplatten 1, 1.1, 1.2 unverändert, da auch die schweren Halteplatten 1.1 und 1.2 an der Basis 10 stets die gleiche Dicke in demjenigen Bereich aufweisen, an dem die (Bolzen-)Öffnungen 14a, 14b, 15a, 15b ausgebildet sind. Ferner liegen alle Öffnungen 13 und 14a, 14b, 15a, 15b für die Befestigungs- und Verbindungselemente 3 und 2a bis 2d auf einem Teilkreisradius und haben denselben Abstand. Hierdurch wird erreicht, dass nur ein Bohrungsmuster an der Verdichterwelle W erforderlich ist und beide Wellenteile entsprechend der Anzahl dieser Öffnungen zueinander positionierbar bleiben.

Unter Nutzung des erfindungsgemäßen Ansatzes kann in einer Ausführungsvariante bei nur sechs Verbindungsstellen (Wuchtpositionen) für drei Halteplattentypen auch mit einer geringeren Anzahl unterschiedlich schwerer Wuchtgewichte eine verbesserte Wuchtgüte gegenüber bisher in der Praxis üblichen Auswuchtverfahren erreicht werden. So können beispielsweise drei Typen Halteelemente 1, 1.1 und 1.2 mit einer minimalen Gewichtsdifferenz von 15 g sowie drei unterschiedlich schwere Typen von hieran festlegbaren Zusatzwuchtelementen zu je 1,25 g, 2,5 g und 3,75 g für die sechs unterschiedlichen, am Umfang entlang gleich verteilten Verbindungsstellen vorgesehen sein. Wie die nachstehenden Tabellen 3a bis 3d hierbei verdeutlichen, kann bereits hiermit trotz der geringen Anzahl an vorgegebenen Wuchtpositionen eine feine Abstufung in Schritten zu je 1,25 g erreicht werden:

**(Tabelle 3a)**

| | 0g | 1,25g | 2,5g | 3,75g | 5g | 6,25g | 7,5g | 8,75g | 10g |
|---|---|---|---|---|---|---|---|---|---|
| 0° | 0 | 1,25g | 2,5g | 3,75g | 3,75g +1,25g | 3,75g +2,5g | 3,75g +3,75g | 15g | 15g |
| 180° | 0 | 0 | 0 | 0 | 0 | 0 | 0 | 3,75g +2,5g | 2,5g +2,5g |

**(Tabelle 3b)**

| | 11,25g | 12,5g | 13,75g | 15g | 16,25g | 17,5g | 18,75g | 20g |
|---|---|---|---|---|---|---|---|---|
| 0° | 15g | 15g | 15g | 15g | 15g +1,25g | 15g +2,5g | 15g +3,75g | 15g +3,75g +1,25g |
| 180° | 3,75g | 2,5g | 1,25g | 0 | 0 | 0 | 0 | 0 |

**(Tabelle 3c)**

| | 21,25g | 22,5g | 23,75g | 25g | 26,25g | 27,5g | 28,75g | 30g |
|---|---|---|---|---|---|---|---|---|
| 0° | 15g +3,75g +2,5g | 15g +3,75g +3,75g | 30g | 30g | 30g | 30g | 30g | 30g |
| 180° | 0 | 0 | 3,75g +2,5g | 2,5g +2,5g | 3,75g | 2,5g | 1,25g | 0 |

**(Tabelle 3d)**

| | 31,25g | 32,5g | 33,75g | 35g | 36,25g | 37,5g |
|---|---|---|---|---|---|---|
| 0° | 30g +1,25g | 30g +2,5g | 30g +3,75g | 30g +3,75g +1,25g | 30g +3,75g +2,5g | 30g +3,75g +3,75g |
| 180° | 0 | 0 | 0 | 0 | 0 | 0 |

Werden 12 Wuchtpositionen vorgesehen, reichen unter Nutzung des erfindungsgemäßen Ansatzes z.B. bereits drei unterschiedlich schwere Typen von Halteelementen 1, 1.1 und 1.2 mit einem Netto-Mehrgewicht zu je 12,5 g sowie ein Typ von Zusatzwuchtelement 4 zu 2,5 g aus, um eine akzeptable Wuchtgüte zu erreichen:

**(Tabelle 4a)**

| | 0g | 2,5g | 5g | 7,5g | 10g | 12,5g | 15g |
|---|---|---|---|---|---|---|---|
| 0° | 0 | 2,5g | 2,5g +2,5g | 12,5g | 12,5g | 12,5g | 12,5g + 2,5g |
| 180 ° | 0 | 0 | 0 | 2,5g +2,5g | 2,5g | 0 | 0 |

**(Tabelle 4b)**

| | 17,5g | 20g | 22,5g | 25g | 27,5g | 30g |
|---|---|---|---|---|---|---|
| 0° | 12,5g + 2,5g + 2,5g | 25g | 25g | 25g | 25g +2,5g | 25g +2,5g +2,5g |
| 180 ° | 0 | 2,5g +2,5g | 2,5g | 0 | 0 | 0 |

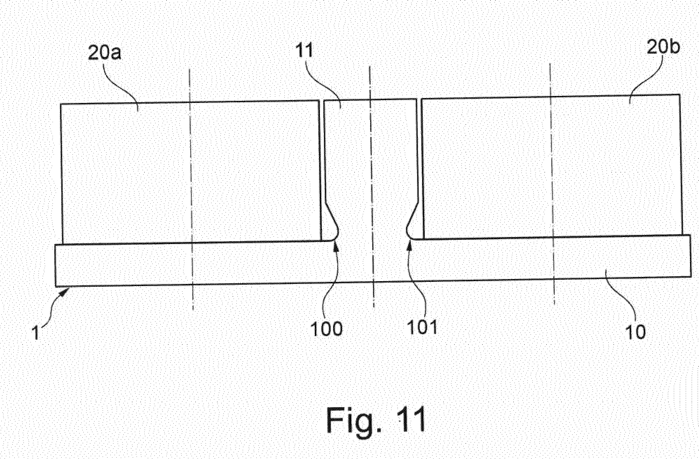

In der Schnittdarstellung der Figur 11 ist in vergrößertem Maßstab der als Verdrehsicherung fungierende Steg 11 mit zwei benachbarten Bolzenköpfen 20a und 20b dargestellt. Hierin sind auch nochmals die Einkerbungen 100 und 101 auf den voneinander abgewandten Seitenflächen 110a und 110b am Fuße des Steges 11 ersichtlich.

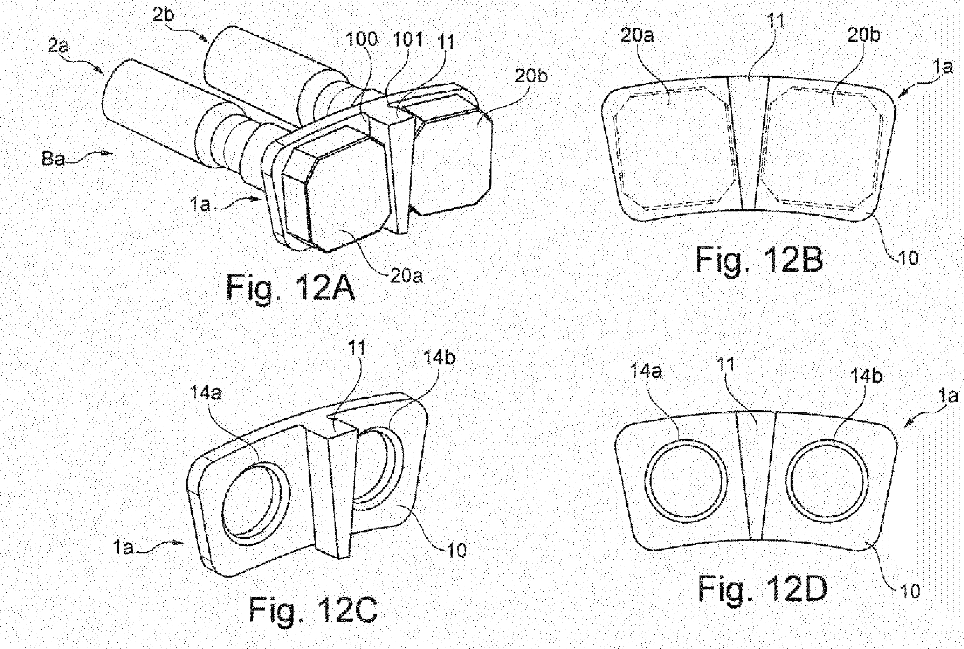

Mit den Figuren 12A bis 12D ist in unterschiedlichen Ansichten eine Variante einer Halteplatte 1a für eine Befestigungsbaugruppe Ba mit lediglich genau einem Paar von Gewindebolzen 2a und 2b veranschaulicht. In dieser Variante definiert eine vergleichsweise kurze Halteplatte 1a lediglich zwei Bolzenöffnungen 14a und 14b, die durch einen einzelnen keilförmigen und radial verlaufenden Steg 11 voneinander getrennt sind. Am Fuß dieses Steges 11 sind beiderseits die Einkerbungen 100 und 101 vorgesehen. Im Übrigen bildet der Steg 11 auch hier eine Verdrehsicherung für die beiden in die Bolzenöffnungen 14a und 14b eingesteckten Gewindebolzen 2a und 2b.

Zwei Befestigungsbaugruppen Ba der Figuren 12A bis 12D können gegebenenfalls alternativ zu einer Befestigungsbaugruppe B für vier Gewindebolzen 2a bis 2d entsprechend den zuvor erläuterten Ausführungsvarianten eingesetzt werden. Auch bei Verwendung von Befestigungsbaugruppen Ba mit lediglich zwei Bolzenöffnungen 14a, 14b können für das Auswuchten unterschiedlich schwere Befestigungsgruppen Ba über unterschiedlich schwere Halteplatten und/oder über zusätzliche Wuchtelemente vorgesehen sein. Etwaige zusätzliche Wuchtelemente werden hierbei beispielsweise unter oder an einen Bolzenkopf eines Gewindebolzens 2a, 2b montiert.

Bei allen dargestellten Ausführungsvarianten werden fest montierte Halteelemente in Form der Halteplatten 1, 1.1, 1.2, 1a und damit jeweils eine Wuchtlösung ohne zusätzliche Halterungen, z.B. in Form von Schrauben oder Klemmen, vorgesehen, womit Wuchtgewichte an einer Welle einer Gasturbine befestigt werden können.

Im Übrigen ist es im Rahmen der erfindungsgemäßen Lösung natürlich nicht zwingend, eine erfindungsgemäß ausgestaltete Befestigungsbaugruppe B oder Ba für eine Turbinenwelle einzusetzen. Abweichend von der dargestellten Ausführung kann in einer Ausführungsvariante zum Beispiel selbstverständlich vorgesehen sein, eine erfindungsgemäß ausgestalte Baugruppe an der Verdichterwelle W einzusetzen.

### Bezugszeichenliste

- 1, 1.1, 1.2, 1 a: Halteplatte (Halteelement)
- 10, 10.1, 10.2: Basis
- 100, 101: Einkerbung
- 102: Fortsatz
- 11: Steg (Verdrehsicherung)
- 110a, 110b: Seitenfläche
- 12: Steg (Verdrehsicherung)
- 120c, 120d: Seitenfläche
- 13: Befestigungsöffnung
- 14a, 14b: Bolzenöffnung
- 15a, 15b: Bolzenöffnung
- 20a, 20b, 20c, 20d: Bolzenkopf
- 21: Mutter
- 22: Kratzschutzplatte
- 2a, 2b, 2c, 2d: Gewindebolzen (Verbindungselement)
- 3: Befestigungsbolzen (Befestigungselement)
- 30: Kopf
- 31: Mutter
- 4: (Zusatz-) Wuchtelement
- 40: Basis
- 41: Hülsenabschnitt
- b, b1: Breite
- B, Ba: Befestigungsbaugruppe
- F_{T}: Wuchtebene
- L, L2: Laufschaufel
- M: Triebwerksachse
- R, R2: Radscheibe
- RF: Flansch
- R_{T}: Wuchtebene
- S: Abdeckscheibe
- SF: Flansch
- U1, U2: Stelle mit Unwucht
- T: Vorrichtungsbauteil / Dummy
- V1, V2: Verbindungsbereich
- W: Verdichterwelle (Wellenteil)

## Patentansprüche

1. Baugruppe für die drehfeste Verbindung mindestens zweier rotierender Bauteile in einer Gasturbine, wobei die Baugruppe (B, Ba) wenigstens das Folgende aufweist:
- ein Halteelement (1, 1.1,1.2) für mindestens vier Verbindungselemente (2a - 2d), die zur drehfesten Verbindung der mindestens zwei Bauteile (R, S, W) aneinander vorgesehen sind, wobei das Halteelement (1, 1.1, 1.2)
o für jedes der Verbindungselemente (2a - 2d) eine Öffnung (14a, 14b, 15a, 15b) aufweist, in die ein Abschnitt eines Verbindungselements (2a - 2d) hindurch gesteckt werden kann, und
o zwischen zwei Öffnungen (14a, 14b; 15a, 15b) einen Abschnitt (11; 12) ausbildet, der bei in die Öffnungen (14a, 14b; 15a, 15b) eingesteckten Verbindungselementen (2a - 2d) diese gegen ein Verdrehen in der Öffnung (14a, 14b; 15a, 15b) sichert,
und
- mindestens ein Befestigungselement (3), das dazu eingerichtet und vorgesehen ist, das Halteelement (1, 1.1, 1.2) an einem der Bauteile (R, S) zu halten und/oder das Halteelement (1, 1.1, 1.2) und mindestens zwei Bauteile (R, S) der Baugruppe (B, Ba) zu verbinden, bevor die mindestens zwei rotierenden Bauteile (R, S, W) über die Verbindungselemente (2a - 2d) drehfest miteinander verbunden werden,
**dadurch gekennzeichnet, dass**
das Befestigungselement (3) zusätzlich dazu eingerichtet und vorgesehen ist, mindestens ein Wuchtelement (4) an dem Halteelement (1, 1.1, 1.2) festzulegen, um eine Unwucht der rotierenden Bauteile (R, S, W) im Bereich ihrer Verbindung ausgleichen zu können, und eine Befestigungsöffnung (13) für das Befestigungselement (3) an dem Halteelement (1, 1.1, 1.2) in etwa mittig zwischen zwei Paaren von Öffnungen (14a, 14b; 15a, 15b) für die Verbindungselemente (2a - 2d) vorgesehen ist.

2. Baugruppe nach 1, **dadurch gekennzeichnet, dass** ein an dem Befestigungselement (3) festgelegtes Wuchtelement (4) über das Befestigungselement (3) formschlüssig an dem Halteelement (1, 1.1, 1.2) fixiert ist.

3. Baugruppe nach Anspruch 1 oder 2, **dadurch gekennzeichnet, dass** der von dem Halteelement (1, 1.1, 1.2) ausgebildete Abschnitt zur Sicherung der Verbindungselemente (2a - 2d) gegen ein Verdrehen stegartig und/oder keilförmig ausgebildet ist.

4. Baugruppe nach Anspruch 3, **dadurch gekennzeichnet, dass** am Fuß des von dem Halteelement (1, 1.1, 1.2) ausgebildeten Abschnitts (11; 12) an der Basis (10, 10.1, 10.2) des Halteelements (1, 1.1, 1.2) eine längserstreckte Einkerbung (100, 101) vorgesehen ist.

5. Anordnung, mit mindestens zwei Gasturbinenbauteilen, die mittels mindestens einer Baugruppe nach einem der Ansprüche 1 bis 4 drehfest miteinander verbunden sind.

6. Anordnung nach Anspruch 5, **dadurch gekennzeichnet, dass** die mindestens zwei drehfest miteinander verbundenen Gasturbinenbauteile (R, S, W) im Betrieb der Gasturbine um eine Rotationsachse rotieren und wenigstens zwei Baugruppen (B, Ba) entlang einer Kreislinie um die Rotationsachse zueinander beabstandet angeordnet sind, um die wenigstens zwei Gasturbinenbauteile (R, S, W) drehfest miteinander zu verbinden.

7. Anordnung nach Anspruch 6, **dadurch gekennzeichnet, dass** weniger als zwölf, insbesondere weniger als neun Verbindungsstellen vorgesehen sind, an denen die wenigstens zwei Gasturbinenbauteile (R, S, W) jeweils mittels einer Baugruppe (B, Ba) miteinander verbunden sind.

8. Anordnung nach einem der Ansprüche 5 bis 7, **dadurch gekennzeichnet, dass** die mindestens zwei drehfest miteinander verbundenen Gasturbinenbauteile (R, S, W) im Betrieb der Gasturbine um eine Rotationsachse rotieren und die mindestens zwei Gasturbinenbauteile (R, S, W) mittels wenigstens zweier Baugruppen (B, Ba) drehfest miteinander verbunden sind, bei denen die Halteelemente (1, 1.1, 1.2) unterschiedlich schwer sind, wobei die unterschiedlich schweren Halteelementen (1, 1.1, 1.2) eine identische Länge aufweisen, das schwerere der mindestens zwei Halteelemente (1, 1.1, 1.2) aber in mindestens einem Abschnitt (102) eine größere Dicke und/oder Breite (b1) aufweist.

9. Verfahren zum Auswuchten einer Anordnung nach einem der Ansprüche 5 bis 8, mit folgenden Schritten:
- Bereitstellen mindestens zweier unterschiedlich schwerer erster und zweiter Halteelemente (1, 1.1, 1.2) mit je mindestens einem Befestigungselement (3),
- Bereitstellen mindestens eines Wuchtelements (4), das über ein Befestigungselement (3) an einem ersten oder zweiten Halteelement (1, 1.1, 1.2) festlegbar ist,
- Verbinden
(a) mindestens zweier im Betrieb der Gasturbine rotierender Gasturbinenbauteile (R, S, W) oder
(b) eines der im Betrieb der Gasturbine rotierenden Gasturbinenbauteile (R, S) mit einem Vorrichtungsbauteil (T) einer Auswuchtvorrichtung, das das mindestens eine andere im Betrieb der Gasturbine rotierende Gasturbinenbauteil (W) simuliert,
mittels mehrerer Verbindungselemente (2a - 2d), die sich durch Öffnungen (14a, 14b, 15a, 15b) an identisch ausgebildeten und gleich schweren ersten Halteelementen (1) erstrecken,
- Messung einer Unwucht im Bereich der Verbindung der mindestens zwei Gasturbinenbauteile (R, S, W) oder der Verbindung zwischen Gasturbinenbauteil (R, S) und Vorrichtungsbauteil (T), und,
- im Fall einer gemessenen Unwucht, Austausch wenigstens eines der ersten Halteelemente (1) durch ein zweites Halteelement (1.1, 1.2) mit anderem Gewicht und/oder Anbringung mindestens eines Wuchtelements (4) an einem der Halteelemente (1, 1.1, 1.2), um die Unwucht auszugleichen, wobei ein Satz von mindestens zwei unterschiedlich schweren und hinsichtlich ihrer Gewichts zueinander abgestuften Typen an Wuchtelementen (4) bereitgestellt wird, die über ein Befestigungselement (3) an den Halteelementen (1, 1.1, 1.2) festlegbar sind, um eine Unwucht auszugleichen.

10. Verfahren nach Anspruch 9, **dadurch gekennzeichnet, dass** mindestens drei unterschiedlich schwere erste, zweite und dritte Halteelemente (1, 1.1, 1.2) mit je mindestens einem Befestigungselement (3) bereitgestellt werden.

11. Verfahren nach Anspruch 10, **dadurch gekennzeichnet, dass** eine Gewichtsdifferenz zwischen den Gewichten eines zweiten und ersten Halteelements (1, 1.1) einer Gewichtsdifferenz zwischen den Gewichten eines dritten und zweiten Haltelements (1.1, 1.2) entspricht.

12. Verfahren nach einem der Ansprüche 9 bis 11, **dadurch gekennzeichnet, dass** eine minimale Differenz zweier Gewichte unterschiedlich schwerer Halteelemente (1, 1.1, 1.2) nicht größer ist als das Doppelte des maximalen Gewichts, das über mindestens ein Wuchtelement (4) an einem Halteelement (1, 1.1, 1.2) anbringbar ist, addiert mit der kleinsten Abstufung im Gewicht zweier unterschiedlich schwerer Typen von Wuchtelementen (4).

13. Verfahren nach einem der Ansprüche 9 bis 12, **dadurch gekennzeichnet, dass** eine Gewichtsdifferenz, die durch ein an einem Halteelement (1, 1.1, 1.2) festlegbares Wuchtelement (4) oder mehrere an dem Halteelement (1, 1.1, 1.2) festlegbare Wuchtelemente (4) bereitgestellt werden kann, genau oder maximal der Hälfte der minimalen Gewichtsdifferenz zwischen zwei unterschiedlich schweren Halteelementen (1, 1.1, 1.2) entspricht.

14. Verfahren nach Anspruch 13, **dadurch gekennzeichnet, dass** ein Satz von Wuchtelementen (4) mit mindestens drei unterschiedlichen Gewichtsstufen bereitgestellt wird, bei dem eine Gewichtsdifferenz zwischen zwei Wuchtelementen (4) unmittelbar aufeinander folgender Gewichtsstufen identisch ist und maximal einem Zehntel einer minimalen Gewichtsdifferenz zwischen zwei unterschiedlich schweren Halteelementen (1, 1.1, 1.2) entspricht.

15. Gasturbinentriebwerk mit einer Baugruppe (B, Ba) nach einem der Ansprüche 1 bis 4 und/oder einer Anordnung nach einem der Ansprüche 5 bis 8.
